# EUROPÄISCHE PATENTSCHRIFT

(11) **EP 3 411 269 B1**
(45) Veröffentlichungstag und Bekanntmachung des Hinweises auf die Patenterteilung: **08.01.2020**
(21) Anmeldenummer: 17702612.7
(22) Anmeldetag: 31.01.2017
(51) Int. Cl.: B60R 9/045, B60R 9/055

(54) **FALTBARER DACHBEHÄLTER FÜR EIN KRAFTFAHRZEUG**
FOLDING ROOFTOP CONTAINER FOR A MOTOR VEHICLE
COFFRE DE TOIT PLIABLE POUR VÉHICULE AUTOMOBILE

(30) Priorität: 01.02.2016 DE 102016201476; 10.02.2016 DE 102016201993; 15.08.2016 DE 102016215171
(43) Veröffentlichungstag der Anmeldung: 12.12.2018
(73) Patentinhaber: SES Solutions GmbH, 01705 Freital (DE)
(72) Erfinder: ESPIG, Serle Johann, 01187 Dresden (DE)
(74) Vertreter: Rau, Schneck & Hübner Patentanwälte Rechtsanwälte PartGmbB
(86) Internationale Anmeldenummer: PCT/EP2017/052033
(87) Internationale Veröffentlichungsnummer: WO 2017/134047

(56) Entgegenhaltungen:
- EP-A1- 2 443 006
- WO-A1-2014/108502
- DE-A1- 2 804 588
- DE-B3-102005 020 627
- US-B2- 9 193 306

## Beschreibung

Die vorliegende Patentanmeldung nimmt die Priorität der deutschen Patentanmeldungen DE 10 2016 201 476.5, DE 10 2016 201 993.7 und DE 10 2016 215 171.1 in Anspruch, deren Inhalte durch Bezugnahme hierin aufgenommen werden.

Die Erfindung betrifft einen faltbaren Dachbehälter für ein Kraftfahrzeug.

Die US 9,193,306 B2 offenbart einen faltbaren Dachbehälter, der in das Dach eines Fahrzeugs integrierbar ausgeführt ist. Eine wiederkehrende Montage des Dachbehälters ist nicht unbedingt erforderlich.

Die DE 10 2011 051 891 A1 offenbart einen abnehmbaren Dachbehälter, der auf einem Dachgepäckträger an einem Fahrzeugdach befestigt ist. Der Dachgepäckträger ist in die Karosserie des Fahrzeugs integriert. Zum Befestigen des Dachgepäckträgers am Fahrzeug sind bauliche und konstruktive Veränderungen am Fahrzeug selbst erforderlich.

Weitere Dachbehälter sind bekannt aus WO 2014/108 502 A1, DE 10 2005 020 627 B3, DE 28 04 588 A1 und EP 2 443 006 A1.

Der Erfindung liegt die Aufgabe zugrunde, einen Dachbehälter für ein Kraftfahrzeug bereitzustellen, der flexibel einsetzbar ist und insbesondere an einem Kraftfahrzeug unaufwendig nachgerüstet werden kann.

Die Aufgabe wird durch die Merkmale des Anspruchs 1 gelöst. Der Kern der Erfindung besteht darin, dass ein Dachbehälter abnehmbar ausgeführt ist. Der Dachbehälter weist eine integrierte Befestigungseinheit auf, um den Dachbehälter unmittelbar am Kraftfahrzeug, insbesondere am Kraftfahrzeugdach, zu befestigen. Zusätzliche Trägerelemente wie beispielsweise ein integrierter Dachgepäckträger gemäß der DE 10 2011 051 891 A1 sind entbehrlich. Gegenüber der integrierten Lösung gemäß der US 9,193,306 B2 weist der erfindungsgemäße Dachbehälter neue Wege und Möglichkeiten eines unkomplizierten Nachrüstens auf. Der Dachbehälter ist flexibel einsetzbar. Der Dachbehälter kann jederzeit wieder abgenommen werden. Erfindungsgemäß wurde erkannt, dass eine zuverlässige Befestigung des Dachbehälters am Kraftfahrzeug mittels der Befestigungseinheit möglich ist. Die Befestigungseinheit ist insbesondere in einem Bodenelement des Dachbehälters integriert. Es wurden weitere Möglichkeiten erkannt, wie am Kraftfahrzeug ohnehin vorhandene Komponenten wie das Kraftfahrzeugdach sowie am Dach angeordnete Formelemente wie eine Dachreling oder ein Antennenformkörper zur Befestigung des Dachbehälters genutzt werden können. Ein konstruktiver Eingriff am Kraftfahrzeug, insbesondere in die Karosserie des Kraftfahrzeugs, um beispielsweise den Dachbehälter selbst oder einen dafür erforderlichen Dachgepäckträger zu integrieren, ist entbehrlich. Der erfindungsgemäße Dachbehälter kann unproblematisch an einem bereits existierenden Kraftfahrzeug nachgerüstet werden. Der abnehmbare Dachbehälter kann als Zubehör zu einem Kraftfahrzeug angeboten werden.

An dem Bodenelement ist eine Deckeleinheit befestigt. Die Deckeleinheit ist auffaltbar. In einem zusammengefalteten Zustand der Deckeleinheit ist der Dachbehälter flach und insbesondere flächenhaft ausgeführt. Flächenhaft bedeutet, dass der Dachbehälter eine Höhe aufweist, die deutlich kleiner ist als die Länge und die Breite des Dachbehälters. Die Höhe ist insbesondere um eine Größenordnung kleiner als die Länge und die Breite des Dachbehälters. Die Höhe beträgt insbesondere weniger als 10 cm, insbesondere weniger als 8 cm und insbesondere weniger als 5 cm. Im zusammengefalteten Zustand der Deckeleinheit ist die Höhe des Dachbehälters im Wesentlichen so groß wie die Höhe einer Dachreling des Kraftfahrzeugs. Im zusammengefalteten Zustand der Deckeleinheit leistet der Dachbehälter im Wesentlichen keinen zusätzlichen Luftwiderstand am Kraftfahrzeug. Das Kraftfahrzeug kann mit dem Dachbehälter im zusammengefalteten Zustand ökonomisch und ökologisch vorteilhaft betrieben werden. Im aufgefalteten Zustand der Deckeleinheit weist der Dachbehälter einen Innenraum auf, der mit Gegenständen wie Gepäck, insbesondere Taschen, Koffer und/oder Schier, beladen werden kann. Im aufgefalteten Zustand ist der Dachbehälter als Ladebehälter ausgeführt. Im aufgefalteten Zustand ist der Dachbehälter als dreidimensionaler Aufnahmebehälter ausgeführt.

Überraschend wurde gefunden, dass der Dachbehälter besonders vorteilhaft an der ohnehin vorhandenen Struktur des Kraftfahrzeugs befestigt werden kann. Dazu kann der Dachbehälter im Wesentlichen flächig mit seiner Unterseite auf das Kraftfahrzeugdach aufgesetzt werden. Eine Befestigung des Dachbehälters am Kraftfahrzeugdach erfolgt insbesondere mittels mehrerer linien- oder streifenförmiger Befestigungselemente wie beispielweise Magnetstreifen. Die Magnetstreifen sind insbesondere an der Unterseite des Dachbehälters so angeordnet, dass sie jeweils mit den Quersäulen des Rahmens des Kraftfahrzeugs, insbesondere der A-Säule, der B-Säule und/oder der C-Säule zusammenwirken. Im Bereich der Längsholme des Kraftfahrzeugrahmens können längs, also in Fahrtrichtung, orientierte Befestigungselemente, insbesondere Magnetstreifen, vorgesehen sein. Zusätzlich oder alternativ können in Hohlräumen von Befestigungssicken die Befestigungselemente angeordnet sein. Durch die linienartige Anordnung der Befestigungselemente wird eine rahmenförmige Befestigungsstruktur geschaffen, die eine zuverlässige und insbesondere an der Kontur der Unterseite des Dachbehälters umlaufende Befestigungslinie ermöglicht. Die Befestigung ist zuverlässig und robust. Es ist denkbar, dass das Bodenelement des Dachbehälters zumindest abschnittsweise in Bereichen zwischen den Befestigungslinien von dem Kraftfahrzeugdach beabstandet ist, also nicht ganzflächig oder vollflächig aufliegt. Dies ist insbesondere dann der Fall, wenn das Bodenelement des Dachbehälters mit einer Vorspannung, insbesondere überwölbt am Kraftfahrzeugdach angeordnet ist.

Alternativ kann die Befestigungseinheit eine großflächige und insbesondere vollflächige Haftung zwischen dem Dachbehälter, insbesondere dem Bodenelement des Dachbehälters und dem Kraftfahrzeugdach ermöglichen. Überraschend wurde erkannt, dass bei einer unmittelbaren Anbringung des Dachbehälters am Kraftfahrzeugdach die gesamte Dachfläche des Kraftfahrzeugs zur Anbringung der Befestigungseinheit nutzbar ist. Gegenüber aus dem Stand der Technik bekannten Querspangen, die beispielsweise an der Reling befestigbar sind und zur punktuellen Verriegelung mit einem Dachbehälter dienen, ist der zur Verfügung stehende Platzbedarf am Kraftfahrzeugdach homogen und effizient ausgenutzt. Die großflächige Befestigung ist insbesondere dadurch gegeben, dass der mit dem Fahrzeugdach verbundene Flächenanteil des Bodenelements des Dachbehälters mindestens 50 % der Fläche des Kraftfahrzeugdach, insbesondere 70 % der Fläche des Kraftfahrzeugdachs, insbesondere mindestens 90 % der Fläche des Kraftfahrzeugdachs und insbesondere mindestens 95 % der Fläche des Kraftfahrzeugdachs abdeckt. Diese großflächige und insbesondere vollflächige Befestigung kann beispielsweise durch streifenartige Befestigungselemente, insbesondere Magnetstreifen, realisiert sein, die entlang der äußeren Kontur des Bodenelements angeordnet sind und den entsprechenden Flächenbereich des Kraftfahrzeugdaches abdecken.

Formelemente, die am Bodenelement angeordnet sind, ermöglichen eine mechanische Befestigung des Dachbehälters. Die mechanische Befestigung ist unkompliziert. Die Formelemente sind am Bodenelement, insbesondere an den Seiten-Begrenzungswänden angeordnet und ermöglichen eine Befestigung an der Dachreling. Die Formelemente sind insbesondere zumindest teilweise elastisch ausgeführt. Die Elastizität der Formelemente kann durch eine Strukturelastizität und/oder durch elastische Materialeigenschaften gegeben sein.

Ein an der Bodenwand integriertes Formelement ermöglicht die Befestigung des Dachbehälters an einer am Kraftfahrzeugdach angeordneten Antenne. Eine derartige Antenne ist beispielsweise haifischflossenartig ausgeführt und insbesondere etwa im hinteren Drittel der Dachfläche sowie hinsichtlich einer seitlichen Orientierung mittig angeordnet. Das Formelement weist eine formschlüssige Geometrie auf, die der Form der Antenne entspricht, sodass insbesondere selbst bei einem abrupten Abbremsen und/oder einem Aufprall des Kraftfahrzeugs ein ungewolltes Lösen des Dachbehälters wegen der umgreifenden Profilgeometrie des Formelements, die als Befestigung am Antennenformkörper dient, im Wesentlichen ausgeschlossen ist.

Eine Integration der Formelemente in die Seiten-Begrenzungswände ermöglicht eine robuste und unkomplizierte Ausführung der Formelemente an dem Bodenelement.

Eine Ausführung der Formelemente als mit einem Neigungswinkel gegenüber der Bodenwand geneigt angeordnete Klemmlippe und/oder mit einer eine Dachreling zumindest anteilig oder vollständig umgreifenden Profilgeometrie ermöglicht eine unmittelbare Befestigung an einer Dachreling. Insbesondere sind die Formelemente jeweils als Klemmlippen ausgeführt, die gegenüber der Bodenwand mit einem Neigungswinkel nach außen geneigt angeordnet sind. Mit den Klemmlippen kann das Bodenelement seitlich zwischen den Dachrelings geklemmt werden. Die Klemmlippen, die sich in einer bevorzugten Ausführung entlang der gesamten Länge oder zumindest abschnittsweise an den Seiten-Begrenzungswänden erstrecken, weisen eine Strukturflexibilität auf. Die Klemmlippen ermöglichen ein kraftschlüssiges und/oder formschlüssiges Anliegen an der Dachreling. Zusätzlich oder alternativ können die Formelemente eine die Dachreling zumindest anteilig oder vollständig umgreifende Profilgeometrie aufweisen. Dadurch ist die Haltekraft durch kraftschlüssiges und/oder formschlüssiges Anliegen zusätzlich erhöht.

Ein Bodenelement gemäß Anspruch 2 ist robust ausgeführt. Das Bodenelement ist insbesondere in Form einer Wanne oder Platte ausgeführt und weist eine hohe Struktursteifigkeit auf. Außenliegende Begrenzungswände bewirken eine Aussteifung des Bodenelements. Ein Durchbiegen des Bodenelements ist dadurch im Wesentlichen verhindert. Die Befestigung des Bodenelements am Kraftfahrzeugdach ist verbessert. Das Bodenelement ist insbesondere aus einem Leichtbauwerkstoff hergestellt, insbesondere aus einer Aluminiumlegierung oder aus Kunststoff wie beispielsweise Acrylnitril-Butadien-Styrol (ABS) und/oder Polylactide (PLA). Das Bodenelement kann auch Verbundwerkstoffe aufweisen, insbesondere faserverstärkte Kunststoffe und/oder faserverstärkte Verbundstoffe. Als Verstärkungsfasern dienen beispielsweise Glasfasern oder Kohlefasern. Derart verstärkte Werkstoffe werden als glasfaserverstärkte Kunststoffe (GFK) bzw. kohlefaserverstärke Kunststoffe (CFK) bezeichnet. Die Verstärkungsfasern sind typischerweise in einer Kunststoffmatrix eingebettet, wobei die Kunststoffmatrix insbesondere Epoxidharz aufweist. Das Bodenelement kann auch flexible Materialien aufweisen wie beispielsweise Elastomere, insbesondere Gummi und/oder Chloropren-Kautschuk. Es ist insbesondere denkbar, das Bodenelement im Wesentlichen einteilig aus einem Elastomer herzustellen und vorzugsweise integrierte feste Strukturen, insbesondere zur Aussteifung des Bodenelements, vorzusehen. Eine feste Struktur kann beispielsweise ein im Elastomer eingebetteter Rahmen, eine eingebettete Platte oder mehrere lineare und/oder nichtlineare Stabelemente sein. Diese feste, aussteifende Struktur ist insbesondere aus einem steifen Material wie beispielsweise Metall, insbesondere Aluminium und/oder Stahl, oder aus einem festen Kunststoff, insbesondere faserverstärktem Kunststoff hergestellt. Das Bodenelement kann insbesondere eine beliebige Kombination der genannten Materialien aufweisen.

Ein Profilelement gemäß Anspruch 3 ermöglicht eine Aussteifung des Bodenelements. Das Bodenelement ist mechanisch besonders belastbar. Insbesondere ist mindestens ein Profilelement im Bodenelement integriert. Das Profilelement ist in Form einer dem Innenraum des Dachbehälters zugewandte Sicke ausgeführt. Das Profilelement ist gegenüber einer Bodenwand des Bodenelements erhaben ausgeführt. Das Profilelement stellt eine Erhöhung gegenüber der Bodenwand dar. Das Profilelement ist eine dem Innenraum des Dachbehälters zugewandte Ausformung. Das Profilelement ist als Formelement ausgeführt. Das Profilelement weist insbesondere eine Längserstreckung auf, die insbesondere in Längsrichtung des Bodenelements orientiert ist. Die Längsrichtung des Profilelements ist insbesondere im Wesentlichen parallel zu Seiten-Begrenzungswänden des Bodenelements orientiert. Insbesondere kann mindestens ein Profilelement auch als Aufnahmeraum für die Befestigungseinheit dienen. An dem mindestens einen Profilelement können zusätzliche Funktionselemente integriert sein, die beispielsweise Bestandteil der Befestigungseinheit sind und/oder zum Verankern eines Gegenstands in dem Dachbehälter und insbesondere am Bodenelement dienen. An und/oder in dem mindestens einen Profilelement können beispielsweise Lichtelemente integriert sein. Ein Lichtelement kann beispielsweise als LED-Element ausgeführt sein. LED-Elemente sind in verschiedenen Ausführungen verfügbar. Insbesondere sind LED-Elemente in verschiedenen Leuchtfarben erhältlich. Insbesondere existieren organische Leuchtdioden (OLED) als Dünnschichtbauelemente, die ebenfalls Lichtelemente sein können. Das mindestens eine Profilelement ist multifunktional ausgeführt und garantiert eine hohe Funktionsintegration.

Eine Schutzschicht gemäß Anspruch 4 gewährleistet, dass ein Aufsetzen und/oder Abnehmen des Dachbehälters keine Beschädigungen am Kraftfahrzeug verursacht. Insbesondere ist ausgeschlossen, dass Lackschäden am Kraftfahrzeug verursacht werden. Die Schutzschicht kann insbesondere vollflächig an der außenliegenden Unterseite des Bodenelements ausgeführt sein. Für die Schutzfunktion der Schutzschicht kann es ausreichend sein, wenn die Schutzschicht zumindest teilweise an der Unterseite angeordnet ist. Die Schutzschicht ist insbesondere eine flexible Lage. Die flexible Lage ist insbesondere aus einem elastischen Material ausgeführt, das insbesondere eine Dämpfungsfunktion aufweist. Das Material ist insbesondere ein Elastomer, insbesondere Gummi.

Ein Magnetelement gemäß Anspruch 5 ermöglicht eine zuverlässige und sichere Befestigung des Dachbehälters unmittelbar am Kraftfahrzeug. Das Magnetelement ist in einer bevorzugten Ausführung ein Permanentmagnet. Das Magnetelement kann alternativ auch in Form eines schaltbaren Elektromagneten ausgeführt sein. Dadurch ist es möglich, die magnetische Haltekraft für die Befestigung des Dachbehälters schaltbar auszuführen. Insbesondere ist es möglich, für die Montage und Demontage die magnetische Haltekraft durch Deaktivierung des Elektromagneten zu deaktivieren. Die Montage und Demontage des Dachbehälters ist vereinfacht. Nach erfolgtem Aufsetzen und Ausrichten des Dachbehälters auf dem Kraftfahrzeug kann die magnetische Haltekraft des Elektromagneten aktiviert werden. Dadurch ist eine zuverlässige Befestigung gewährleistet. Das Magnetelement ist insbesondere in der Befestigungseinheit integriert und insbesondere von außerhalb nicht sichtbar. Das Magnetelement ermöglicht ein zuverlässiges Befestigen am Kraftfahrzeugdach und/oder an der Dachreling. Insbesondere sind mehrere Magnetelemente in der Befestigungseinheit integriert. Die Magnetelemente gewährleisten eine flächenhafte magnetische Haltekraft zwischen der Befestigungseinheit und dem Kraftfahrzeugdach. Die Befestigung ist verbessert. Die Magnetelemente können insbesondere streifenförmig beispielsweise entlang des äußeren Umfangs des Bodenelements angeordnet sein. Dadurch ist insbesondere eine zuverlässige Befestigung des Dachbehälters an einem Kraftfahrzeugdach aus einem ferromagnetischen Material, insbesondere hochfestem Stahl, möglich. Zusätzlich oder alternativ ist es möglich, das mindestens eine Magnetelement beispielsweise streifenförmig auszuführen und mit einer Quererstreckung derart an der Befestigungseinheit anzuordnen, dass sich das Magnetelement entlang einer Querrichtung des Bodenelements erstreckt. Insbesondere ist das Magnetelement quer und insbesondere senkrecht zu Seiten-Begrenzungswänden des Bodenelements orientiert. Dadurch ist eine Befestigung des Dachbehälters an einem Kraftfahrzeugdach möglich, das aus nicht-magnetischem Material ausgeführt ist wie beispielsweise eine Aluminiumlegierung oder Kunststoff, insbesondere kohlefaserverstärkte Kunststoffe. Das mindestens eine Magnetelement mit Quererstreckung verursacht eine magnetische Haltekraft auf die unterhalb des Kraftfahrzeugs angeordneten Rahmenelemente, insbesondere Querträger. Derartige Rahmenelemente, die beispielsweise mit der A-, B- und/oder der C-Säule verbunden sind, sind typischerweise aus Stahlwerkstoffen hergestellt.

Ein Hakenelement gemäß Anspruch 6 ermöglicht ein unmittelbares Einhaken des Dachbehälters in einem Spalt der Karosserie. Ein derartiger Spalt ist beispielsweise an einer Oberseite der Karosserie zwischen dem Kraftfahrzeugdach und der Heckklappe üblich. Das Hakenelement ist beispielsweise als nach unten vorspringender Quersteg ausgeführt, der insbesondere an der Bodenwand nach unten vorsteht. Der Quersteg kann auch integral an der Heck-Begrenzungswand ausgeführt sein, die an der Bodenwand nach unten übersteht. Der Quersteg ist in einer bevorzugten Ausführung aus einem festen oder hochfesten Material hergestellt und mit einem Elastomer, beispielsweise Gummi, umhüllt.

Ein Klemmelement gemäß Anspruch 7 ermöglicht eine zusätzliche Klemmsicherung für den Dachbehälter. Das Klemmelement ist in einer bevorzugten Ausführung flexibel, insbesondere als Klemmband ausgeführt, das in einen offenbaren Spalt der Karosserie, insbesondere an einer Fahrzeugtür und/oder an der Heckklappe, einklemmbar ist. Dazu kann der einzuklemmende Abschnitt ein Ankerelement aufweisen, wobei das Ankerelement eine Dicke aufweist, die größer ist als die Spaltbreite, so dass ein unbeabsichtigtes Herausziehen des Klemmelements aus dem Spalt ausgeschlossen ist.

Mindestens ein Rasthebel gemäß Anspruch 8 ermöglicht eine zuverlässige Befestigung des Behälters an der Reling, die bei einigen Fahrzeugmodellen eine Länge aufweist, die kleiner ist als die Länge der Dachfläche. Der Rasthebel ermöglicht ein verrastendes Anliegen an einer Vorderseite und/oder Rückseite der Dachreling. Ein Rasthebelgehäuse ist insbesondere an die Gestaltung der Dachreling angepasst. Durch das Rasthebelgehäuse wird die Gestalt der Reling am Kraftfahrzeug verlängert. Der Dachbehälter ist insbesondere in Fahrrichtung zuverlässig gehalten.

Eine Schutzbefestigung gemäß Anspruch 9 verhindert ein unbeabsichtigtes Lösen des Dachbehälters, insbesondere infolge eines Aufpralls des Kraftfahrzeugs auf ein Hindernis. Die Schutzbefestigung gewährleistet, dass der Dachbehälter auch bei einem Unfall zuverlässig am Kraftfahrzeug befestigt bleibt. Ein unbeabsichtigtes Lösen kann auch durch unerlaubtes Entwenden gegeben sein. Die Schutzbefestigung bildet einen Diebstahlschutz. Die Schutzbefestigung ist vorzugsweise am Bodenelement oder an einem Rahmen des faltbaren Dachbehälters befestigt.

Ein seitlich verlagerbares Verriegelungselement gemäß Anspruch 10 ermöglicht ein zuverlässiges Verriegeln des Dachbehälters. Insbesondere wurde erkannt, dass ein Verriegelungselement in eine seitliche Vertiefung einer Dachreling eingreifen kann, so dass ein Abnehmen des Dachbehälters nur dadurch möglich ist, dass die Verriegelungsposition des Verriegelungselements gelöst wird. Das Verriegelungselement kann beispielsweise ein federgelagerter Bolzen sein, der beim Aufsetzen des Dachbehälters auf das Kraftfahrzeugdach in eine dafür vorgesehene Vertiefung oder Ausnehmung einrastet. Das Verriegelungselement kann auch eine betätigbare Verriegelungsschraube sein, die in die Ausnehmung oder Vertiefung eingeschraubt wird. Das Verriegelungselement ist Teil eines Verriegelungsmechanismus.

Ein Befestigungselement gemäß Anspruch 11, insbesondere in Form einer Befestigungsschraube, ermöglicht ein unmittelbares Befestigen an einer dafür vorgesehenen, an einem Kraftfahrzeugdach integrierten Befestigungsstelle. Insbesondere sind die Befestigungsstellen an einer Oberseite des Kraftfahrzeugdachs angeordnet. Das mindestens eine Befestigungselement ist quer, insbesondere senkrecht, zur Bodenwand, also in Höhenrichtung, verlagerbar.

Eine Befestigungsstelle kann auch zur Befestigung der Antenne am Kraftfahrzeugdach dienen. Zur Befestigung der Antenne dienen mindestens eine oder mehrere Antennenschrauben. Insbesondere wurde erkannt, dass es möglich ist, die Antennenschraube zu lösen, die Antenne vom Dach des Kraftfahrzeugs abzunehmen und die am Dach des Kraftfahrzeugs integrierte bzw. verankerte Gewindeöffnung zum Einschrauben der Befestigungsschraube zu nutzen. Die Befestigungsschraube kann in die durch das Lösen der Antenne frei gewordene Gewindebohrung zum Befestigen des Dachbehälters eingeschraubt werden. Entsprechend ist an dem Dachbehälter, insbesondere an der Deckeleinheit und insbesondere an der Deckelwand, eine korrespondierende Gewindebohrung vorgesehen, um die Antenne am Dachbehälter zu befestigen. Die am Dachbehälter befestigte Antenne ist mit einem Signalkabel mit der Befestigungsstelle verbunden, wobei das Signalkabel insbesondere entlang des Deckelelements, über ein Rahmenscharnier und das Bodenelement hin zur Befestigungsstelle und der Antennenschraube geführt sein kann. Grundsätzlich ist es auch denkbar, eine kabellose Übertragung des Antennensignals von der Antenne am Dachbehälter zu der Befestigungsstelle vorzusehen.

Eine Steuereinheit gemäß Anspruch 12 ermöglicht eine vorteilhafte Anordnung einer künstlichen Intelligenz, die zum Betreiben des Kraftfahrzeugs zum autonomen Fahren erforderlich ist. Insbesondere sind nachrüstbare Systeme für Kraftfahrzeuge bekannt, um diese zum autonomen Fahren vorzubereiten. Derartige Nachrüstsysteme zum autonomen Fahren sind typischerweise auf dem Kraftfahrzeugdach im Frontbereich angeordnet. Es ist denkbar, diese Systeme im Dachbehälter platzsparend anzuordnen. Die Steuereinheit ist insbesondere mit dem Kraftfahrzeug, insbesondere einem Bordcomputer des Kraftfahrzeugs, in Signalverbindung bringbar. Die Signalverbindung kann kabelgebunden oder kabellos erfolgen. Zusätzlicher Raumbedarf im Kraftfahrzeug und/oder auf dem Kraftfahrzeugdach für die künstliche Intelligenz der Steuereinheit und/oder das Nachrüstsystem ist nicht erforderlich. Mit dem Dachbehälter können zusätzliche Funktionalitäten, insbesondere das autonome Fahren des Kraftfahrzeugs, unkompliziert nachgerüstet werden, indem beispielsweise der Bordcomputer des Kraftfahrzeugs mit entsprechender Software aktualisiert wird, die mit der künstlichen Intelligenz zusammenwirkt.

Ein Anzeigeelement ermöglicht ein flexibles Anzeigen von Bildern und/oder Schriftzügen wie beispielsweise "Taxi" oder "Polizei". Insbesondere ermöglicht das Anzeigeelement die Anzeige von digitalen Inhalten, insbesondere in Form eines Bildschirms, insbesondere in Form eines verfahrbaren Bildschirms. Insbesondere ist das Anzeigeelement an dem Dachbehälter, insbesondere in einem vorderen, der Windschutzscheibe des Kraftfahrzeugs zugewandten Bereich oder in einem hinteren, dem Heck des Kraftfahrzeugs zugewandten Bereich, angeordnet. Das Anzeigeelement kann seitlich, also an Seitenwänden des Dachbehälters, aber auch an einer Rückwand angeordnet sein. Es ist auch denkbar, mehrere Anzeigeelemente, insbesondere beidseitig an den Seitenwänden des Dachbehälters vorzusehen. Mittels des Anzeigeelements können digitale Inhalte veränderlich angezeigt werden. Das Anzeigeelement dient als flexible Beschriftung beispielsweise ein Form eines laufenden Textbandes und/oder als veränderliche Anzeige, also mit veränderlichen Inhalten, für den Dachbehälter und insbesondere für das Kraftfahrzeug.

Mittels mindestens einer Verankerungseinheit gemäß Anspruch 13 kann ein Gegenstand in dem Dachbehälter verankert wer den. Die Sicherheit von Gegenständen während des Transports in dem Dachbehälter ist verbessert. Fahrbewegungen, insbesondere abrupte Beschleunigungs- und Abbremsvorgänge und/oder Lenkmanöver, des Kraftfahrzeugs sind unproblematisch. Der Gegenstand ist definiert und zuverlässig im Dachbehälter angeordnet. Der Dachbehälter weist ein Bodenelement und eine daran befestigte Deckeleinheit auf, die insbesondere auffaltbar ausgeführt ist. Die Verankerungseinheit ist insbesondere am Bodenelement integriert. Die Verankerungseinheit weist insbesondere ein Verankerungselement auf, das mit einem Verankerungsgegenelement des zu befestigenden Gegenstands lösbar und verankerbar zusammenwirkt.

Weitere vorteilhafte Ausgestaltungen, zusätzliche Merkmale und Einzelheiten der Erfindung ergeben sich aus der nachfolgenden Beschreibung von Ausführungsbeispielen anhand der Zeichnung. Es zeigen:
- Fig. 1: eine perspektivische Explosionsdarstellung eines erfindungsgemäßen Dachbehälters,
- Fig. 2: eine Draufsicht auf ein Bodenelement des Dachbehälters gemäß Fig. 1,
- Fig. 3: eine perspektivische, teilgeschnittene vergrößerte Detaildarstellung von hinten des Dachbehälters gemäß Fig. 2,
- Fig. 4: einen Fig. 3 entsprechenden Längsschnitt,
- Fig. 5: eine perspektivische Schemadarstellung eines Kraftfahrzeugdaches mit einer Dachreling,
- Fig. 6: eine Schnittdarstellung gemäß Schnittlinie IV-IV in Fig. 5,
- Fig. 7: eine zu Fig. 6 korrespondierende Schnittdarstellung einer Befestigungseinheit mit einem seitlichen Formelement,
- Fig. 8: eine perspektivische Ansicht von oben auf ein Kraftfahrzeugdach mit einem Bodenelement gemäß einer weiteren Ausführungsform,
- Fig. 9: eine vergrößerte Schnittdarstellung einer seitlichen Befestigung des Bodenelements gemäß Fig. 8,
- Fig. 10: eine schematische Schnitt-Darstellung einer Befestigung mittels eines Hakenelements gemäß Schnittlinie X-X in Fig. 8,
- Fig. 11: eine perspektivische Ausschnittsansicht eines Kraftfahrzeugs mit dem Dachbehälter mit aufgefalteter Deckeleinheit und Klemmelementen,
- Fig. 12: eine perspektivische Darstellung eines Kraftfahrzeugs mit einem Dachbehälter gemäß einer weiteren Ausführungsform,
- Fig. 13: eine vergrößerte Detaildarstellung der Befestigungseinheit gemäß Fig. 12 in einem aktivierten bzw. geöffneten Zustand,
- Fig. 14: eine perspektivische Darstellung eines Kraftfahrzeugdaches mit Befestigungsstellen,
- Fig. 15: eine perspektivische Ansicht eines Bodenelements für einen Dachbehälter gemäß einer weiteren Ausführungsform,
- Fig. 16: eine Fig. 15 entsprechende Draufsicht,
- Fig. 17: eine vergrößerte, perspektivische Detaildarstellung einer Schutzbefestigung,
- Fig. 18: eine schematische Darstellung des Dachbehälters gemäß Fig. 15 in einer verriegelten Anordnung der Schutzbefestigung an der Dachreling,
- Fig. 19: eine perspektivische vergrößerte Darstellung einer weiteren Schutzbefestigung,
- Fig. 20: eine schematische Darstellung einer funkgesteuerten Betätigung eines Schlosses eines Dachbehälters,
- Fig. 21: eine vergrößerte Detaildarstellung einer am Dach des Kraftfahrzeugs befestigten Antenne,
- Fig. 22: eine Fig. 21 entsprechende Darstellung in einer gelösten Anordnung der Antenne vom Kraftfahrzeugdach,
- Fig. 23: eine Querschnittsdarstellung mit einem an der Befestigungsstelle gemäß Fig. 22 befestigten Dachbehälter,
- Fig. 24: eine Fig. 23 entsprechende Darstellung mit der am Dachbehälter befestigten Antenne gemäß Fig. 22,
- Fig. 25: ein Längsschnitt der am Dachbehälter befestigten Antenne gemäß Fig. 24,
- Fig. 26: eine Antenne eines Kraftfahrzeugs gemäß einer weiteren Ausführungsform,
- Fig. 27: eine Darstellung der von einer Halterung gelösten Antenne gemäß Fig. 26,
- Fig. 28: eine Fig. 23 entsprechende Darstellung zur Befestigung des Dachbehälters in einer dafür vorgesehenen Befestigungsstelle gemäß Fig. 27,
- Fig. 29: eine perspektivische Ansicht des Bodenelements des Dachbehälters gemäß Fig. 1 mit einem daran befestigten Gegenstand,
- Fig. 30: eine vergrößerte, perspektivische Querschnittsdarstellung durch einen Dachbehälter im zusammengefalteten Zustand,
- Fig. 31: eine Fig. 2 entsprechende perspektivische Darstellung eines Bodenelements gemäß einer weiteren Ausführungsform,
- Fig. 32: eine vergrößerte perspektivische Darstellung eines Profilelements mit einer Saugnapfbefestigung,
- Fig. 33: einen Längsschnitt gemäß Schnittlinie XXXIII - XXXIII in Fig. 32,
- Fig. 34: eine schematische Schnittansicht eines Dachbehälters gemäß einer weiteren Ausführungsform mit einem Ladungssensor,
- Fig. 35: eine perspektivische Darstellung des aufgefalteten Dachbehälters in geöffneter Anordnung gemäß einer weiteren Ausführungsform,
- Fig. 36: eine perspektivische Darstellung des Rahmens des Dachbehälters gemäß Fig. 35,
- Fig. 37: eine vergrößerte Detaildarstellung des Details XXXVII in Fig. 36,
- Fig. 38: eine vergrößerte perspektivische Detaildarstellung eines Dachbehälters, bei dem die Befestigungseinheit mindestens einen Rasthebel aufweist, und
- Fig. 39: eine Fig. 38 entsprechende Anordnung mit dem Rasthebel in geschwenkt verrastetem Zustand.

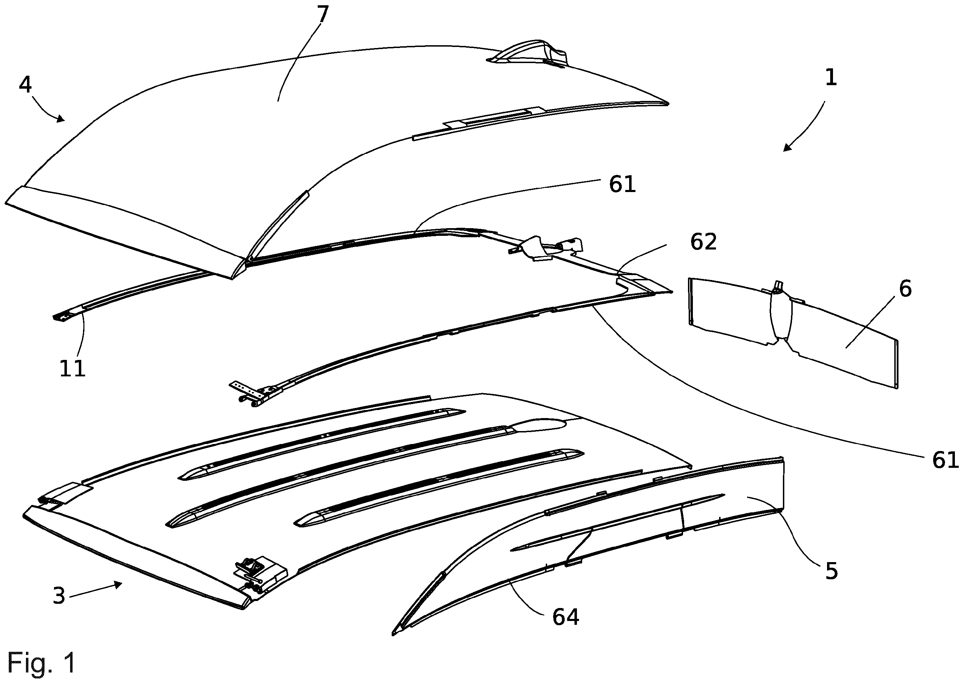

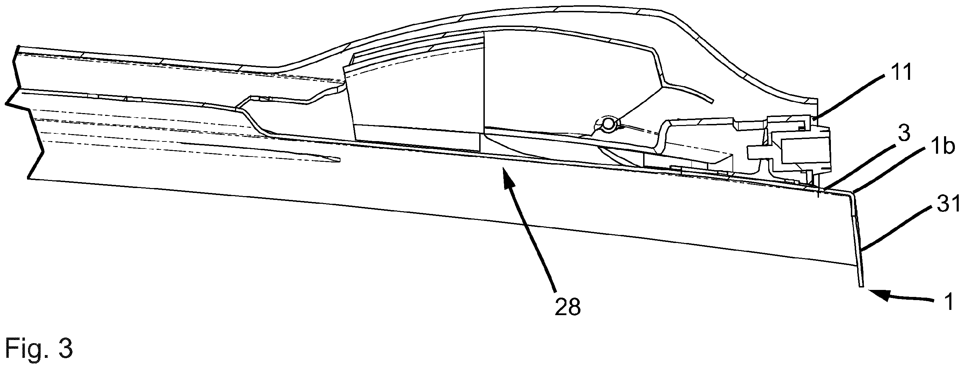

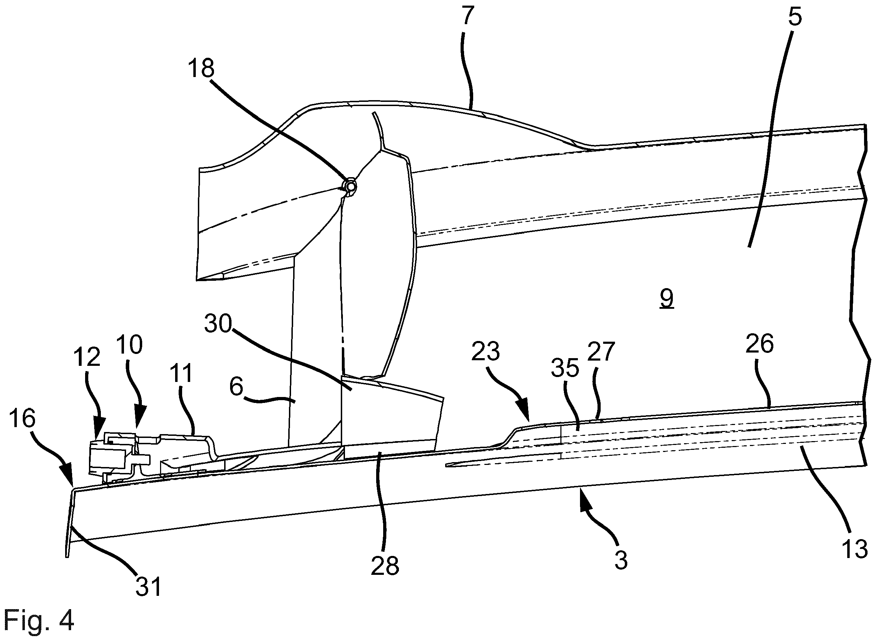

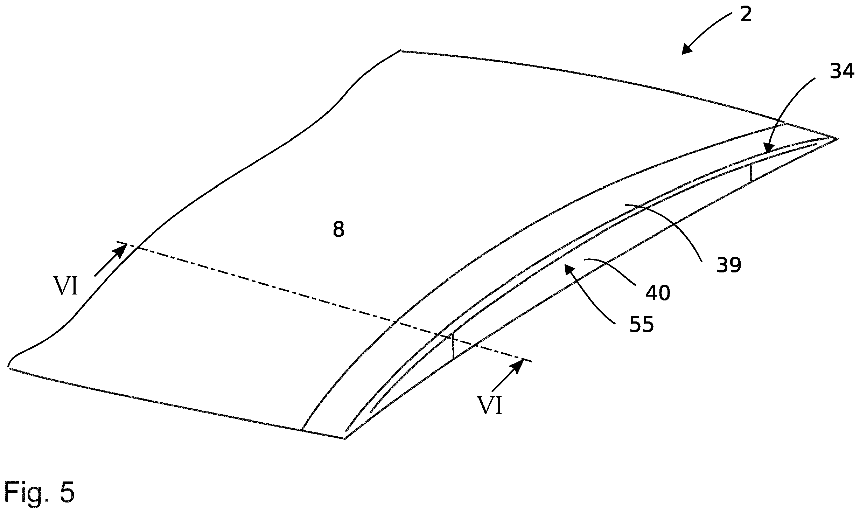

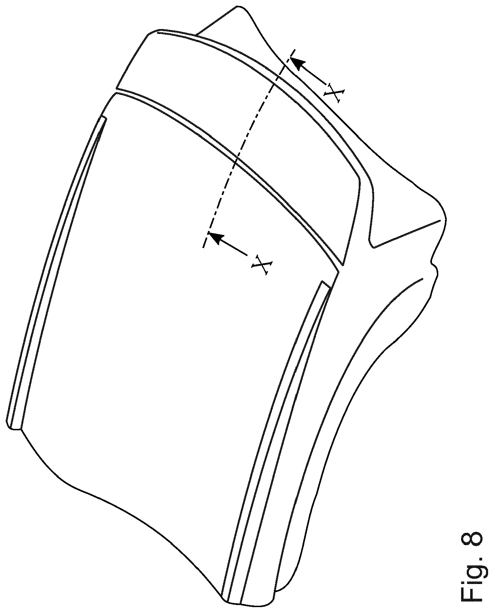

Ein in Fig. 1 bis 11 dargestellter Dachbehälter 1 für ein Kraftfahrzeug 2 umfasst ein Bodenelement 3 und eine daran befestigte Deckeleinheit 4. Die Deckeleinheit 4 ist über einen Rahmen 11 am Bodenelement 3 befestigt. Der Rahmen 11 ist im Wesentlichen U-förmig ausgeführt und weist zwei seitliche Längselemente 61 auf, die im Wesentlichen parallel zueinander orientiert und an einer Rückseite mittels eines Heckelements 62 einstückig miteinander verbunden sind.

Die Deckeleinheit 4 umfasst faltbare Seitenwände 5, wobei aus darstellerischen Gründen in Fig. 1 nur eine Seitenwand 5 gezeigt ist. Die Seitenwände 5 sind jeweils um ihre untere Kante 64 schwenkbar am Bodenelement 3 angelenkt. Die Deckeleinheit 4 weist ferner eine Rückwand 6 und eine Deckelwand 7 auf. Der Rahmen 11 verbindet die Seitenwände 5, die Rückwand 6 und die Deckelwand 7. Die so verbundenen Elemente 5, 6, 7 und 11 bilden die Deckeleinheit 4. Die Rückwand 6 ist schwenkbar am Bodenelement 3 angelenkt. Die Deckelwand 7 ist schwenkbar mit den Seitenwänden 5 und der Rückwand 6 verbunden.

Die auffaltbare Deckeleinheit 4 ist zwischen einer zusammengefalteten Anordnung und einer aufgefalteten Anordnung faltbar. In der zusammengefalteten Anordnung ist der Dachbehälter 1 flach ausgeführt. Der Dachbehälter 1 kann platzsparend gelagert und mit geringem zusätzlichen Luftwiderstand auf einem Dach 8 des Kraftfahrzeugs 2 angeordnet sein. Im aufgefalteten Zustand umschließen die Seitenwände 5, die Rückwand 6, die Deckelwand 7 und das Bodenelement 3 einen Innenraum 9. In dem Innenraum 9 können Gegenstände transportiert werden.

Die Größe des Bodenelements 3, also die Grundfläche des Dachbehälters 1 ist im Wesentlichen durch die Größe des Dachs 8 des Kraftfahrzeugs 2 vorgegeben. Das Volumen des Innenraums 9 des Dachbehälters 1 kann zwischen 100 l und 500 l bei einem Kraftfahrzeug, insbesondere einem Personenkraftwagen, betragen. Bei einem Nutzfahrzeug, beispielsweise einem Kleintransporter, der gegenüber einem Personenkraftwagen eine größere Dachfläche aufweist, kann das Volumen des Innenraums 9 des Dachbehälters 1 deutlich größer sein und beispielsweise 700 l und insbesondere 1000 l oder mehr betragen.

Der Dachbehälter 1 weist ferner eine Schlosseinheit 10 auf. Im aufgefalteten Zustand der Deckeleinheit 4 ist die Schlosseinheit 10 außerhalb des Innenraums 9 angeordnet. Die Schlosseinheit 10 ist in einem Rahmen 11 integriert, in dem ein Schloss 12 integriert ist. Das Schloss 12 ermöglicht es, den Dachbehälter 1 zu verschließen und insbesondere eine unbeabsichtigte und/oder unberechtigte Nutzung oder Zugänglichkeit in den Innenraum 9 des Dachbehälters 1 zu verhindern.

Details eines faltbaren Dachbehälters mit einer auffaltbaren Deckeleinheit sowie Details betreffen das Auffalten und Zusammenfalten eines derartigen Dachbehälters sind in der DE 10 2011 051 891 A1 und in der US 9,193,306 B2 beschrieben, worauf hiermit ausdrücklich verwiesen wird. Ein wesentlicher Unterschied gegenüber diesen vorbekannten Dachbehältern besteht darin, dass die Deckelwand 7 des Dachbehälters 1 einstückig ausgeführt ist. Die Deckelwand 7 wird auch als Deckelelement bezeichnet.

Nachfolgend wird insbesondere das Bodenelement 3 näher erläutert. Das Bodenelement 3 kann im Wesentlichen wannenartig ausgeführt sein. Das Bodenelement 3 ist einstückig ausgeführt.

Das Bodenelement 3 weist eine Bodenwand 13 auf. Die Form der Bodenwand 13 ist an die Kontur des Daches 8 des Kraftfahrzeugs 2 angepasst. Die Bodenwand 13 kann eine Krümmung aufweisen. Im Wesentlichen ist die Bodenwand 13 flächig ausgeführt. Die Bodenwand 13 ist im Wesentlichen rechteckförmig ausgeführt und weist zwei seitliche Längskanten 14, eine Frontkante 15 sowie eine Heckkante 16 auf. Die Frontkante 15 ist der Windschutzscheibe 63 des Kraftfahrzeugs 2 zugewandt und ist entsprechend der Kontur der Windschutzscheibe 63 und/oder der Kontur des Daches 8 des Kraftfahrzeugs 2 gekrümmt. Die Längskanten 14 sind gegenüberliegend zueinander an der Bodenwand angeordnet. Die Längskanten 14 sind einer Dachreling 34 zugewandt angeordnet. Die Heckkante 16 ist dem Fahrzeugheck, insbesondere einer Heckklappe 33 zugewandt angeordnet. Das Bodenelement 3 und insbesondere die Bodenwand 13 weisen eine Längsachse 17 auf. Bezüglich der Längsachse 17 ist das Bodenelement 3 symmetrisch ausgeführt. Die Seitenwände 5 der Deckeleinheit 4 sind jeweils im Bereich der Längskanten 14 schwenkbar am Bodenelement 3 angelenkt. Die Rückwand 6 der Deckeleinheit 4 ist um eine Schwenkachse 18 schwenkbar an der Deckelwand 7 angelenkt. Die Deckelwand 7 ist schwenkbar im Bereich der Frontkante 15 am Bodenelement 3 angelenkt. Zur schwenkbaren Anlenkung der Deckelwand 7 am Bodenelement 3 sind Schwenkbolzen 22 vorgesehen, die im vorderen Bereich der Bodenwand 13, benachbart zu der Frontkante 15 angeordnet sind.

Im Bereich der Heckkante 16 weist die Bodenwand 13 ein einteilig angeformtes Hakenelement 31 auf. Das Hakenelement 31 ist als ein entlang der Heckkante 16 nach unten, also dem Autodach 8 zugewandt orientierter Steg ausgeführt. Das Hakenelement 31 ist ein Bestandteil der Befestigungseinheit und dient zum Einhaken in einen Spalt 32 des Kraftfahrzeugs 2. Der Spalt 32 ist insbesondere zwischen dem Dach 8 und einer Heckklappe 33 des Fahrzeugs 2 angeordnet. Das Hakenelement 31 verhindert ein unbeabsichtigtes Nachvornerutschen des Dachbehälters 1 bei einer Vollbremsung und/oder einem Aufprall des Kraftfahrzeugs 2 auf ein Hindernis. Das Hakenelement 31 ermöglicht einen unmittelbaren Formschluss des Dachbehälters an dem Kraftfahrzeug 2. Insbesondere wurde erkannt, dass der am Kraftfahrzeug 2 ohnehin vorhandene Spalt 32 zum formschließenden Befestigen des Dachbehälters 1 genutzt werden kann.

Einteilig an der Bodenwand 13 sind eine Front-Begrenzungswand 19, eine Heck-Begrenzungswand 20 sowie zwei Seiten-Begrenzungswände 21 angeordnet. Die Begrenzungswände 19, 20, 21 sind insbesondere miteinander verbunden und bilden einen umlaufenden Seiten-Begrenzungssteg um die Bodenwand 13.

In der Bodenwand 13 sind gemäß dem gezeigten Ausführungsbeispiel drei Profilelemente 23 eingeformt. Die Profilelemente 23 sind jeweils parallel zur Längsachse 17 ausgerichtet. Die Profilelemente 23 sind Längs-Profilelemente. Die Profilelemente 23 weisen eine Längserstreckung auf, die parallel zur Längsachse 17 orientiert ist. In einer Schnittebene senkrecht zur Längsachse 17 weisen die Profilelemente eine im Wesentlichen trapezförmige Kontur auf, die dem Innenraum 9 zugewandt ist. Die Profilelemente 23 sind Erhebungen, die sich von der Bodenwand 13 aus in Richtung des Innenraums 9 erstrecken.

In Längsrichtung weisen die Profilelemente 23 jeweils an einem vorderen, jeweils der Frontkante 15 zugewandten Ende und an einem jeweils hinteren, der Heckkante 16 zugewandten Ende einen Auslaufbereich 24 auf. In einem zwischen den Auslaufbereichen 24 angeordneten Hauptbereich 25 des Profilelements 23 sind an einer Horizontalwand entlang der Längserstreckung mehrere Langlöcher 26 und Durchgangsöffnungen 27 vorgesehen und insbesondere wechselweise angeordnet.

Die Profilelemente 23 bilden eine integrierte Verankerungseinheit. Die Verankerungseinheit dient zum Verankern eines Gegenstands wie beispielsweise eines Koffers oder von Skiern in dem Dachbehälter 1. Unbeabsichtigte und insbesondere kritische Lenk-, Beschleunigungs- und/oder Bremsmanöver führen nicht zu einer unerwünschten Verlagerung der Gegenstände in dem Dachbehälter 1. Sowohl der Dachbehälter 1 als auch die Gegenstände sind dadurch besser geschützt. Die Verankerungseinheit umfasst im Wesentlichen Verankerungselemente, die durch die Langlöcher 26 und/oder die Durchgangsbohrungen 27 gebildet sind. Entsprechend können an den Gegenständen korrespondierende Verankerungsgegenelemente vorgesehen sein, die zum verrastenden Anliegen oder Eingreifen oder Einschrauben ausgeführt sein können.

Die Langlöcher 26 weisen eine im Wesentlichen konstante Langlochbreite auf, die an einer Stelle, insbesondere entlang der Längsachse 17 mittig, eine Zentralbohrung 60 mit einem Durchmesser aufweist, der größer ist als die Breite des Langlochs. An der Zentralbohrung 60 kann beispielsweise ein Verriegelungsgegenelement eines Gegenstands in den Schlitz des Langlochs 26 eingeführt sein. Das Verriegelungsgegenelement kann beispielsweise ein federgelagerter Kopfbolzen sein, dessen Kopf einen Durchmesser aufweist, der kleiner ist als der Durchmesser der Zentralbohrung 60, aber größer als die Breite des Schlitzes des Langlochs 26 ist. Durch Längsverschieben des Gegenstands mit eingeführtem Kopfbolzen entlang des Langlochs ist der Gegenstand mit dem Verriegelungsgegenelement sicher an dem Profilelement 23 befestigt. Um ein unerwünschtes Verrutschen entlang des Langlochs 26 zu verhindern und insbesondere auszuschließen, kann der Kopf an dem Verriegelungsgegenelement federgelagert ausgeführt sein, sodass eine Federkraft ein Anpressen des Kopfes vom Hohlraum 35 an die Unterseite des Profilelements 23 bewirkt. Am Langloch 26 können auch mehrere Zentralbohrungen 60 vorgesehen sein, die insbesondere gleich beabstandet am Langloch 26 angeordnet sind. Die Abstände zwischen zwei benachbarten Zentralbohrungen 60 eines Langlochs 26 können auch unterschiedlich groß ausgeführt sein.

Die Bodenwand 13 weist ferner ein Antennen-Formelement 28 auf. Das Antennen-Formelement 28 ist als Durchgangsöffnung in der Bodenwand 13 ausgeführt. Die Durchgangsöffnung ist konzentrisch zur Längsachse 17 und benachbart zur Heckkante 16 angeordnet. Das Antennen-Formelement 28 ist gemäß dem gezeigten Ausführungsbeispiel in Fig. 1 mit dem Auslaufbereich 24 des mittig angeordneten Profilelements 23 überlagert. Durch das Antennen-Formelement 28 kann die Antenne 30 des Kraftfahrzeugs 2 durchgeführt werden.

An der dem Dach 8 zugewandten Unterseite weist die Bodenwand 13 eine Schutzschicht bzw. einen Schutzbelag auf. Dadurch ist gewährleistet, dass beim Aufsetzen und/oder Abnehmen des Dachbehälters 1 auf dem Dach 8 der Lack nicht zerstört oder verkratzt wird. Die Schutzschicht und/oder der Schutzbelag kann im Bereich der Antenne des Kraftfahrzeugs 2 die Form der Antenne einnehmen und sich insbesondere über die Antenne als Formelement 28 erstrecken, sodass auch die Antenne 30 vor Verkratzungen geschützt ist.

In dem Bodenelement 3 ist eine Befestigungseinheit integriert. Die Befestigungseinheit dient zum unmittelbaren Befestigen des Dachbehälters 1 bzw. dessen Bodenelement 3, auf dem Dach 8 des Kraftfahrzeugs 2. Mittels der Befestigungseinheit ist der Dachbehälter 1 lösbar am Dach 8 befestigbar. Der Dachbehälter 1 ist abnehmbar ausgeführt. Zusätzliche Befestigungselemente, beispielsweise Trägerelemente in Form von Dachgepäckträgern, sind entbehrlich. Der Dachbehälter 1 wird unmittelbar auf das Kraftfahrzeugdach 8 aufgesetzt und befestigt.

Die Befestigungseinheit weist gemäß dem gezeigten Ausführungsbeispiel mehrere integrierte Magnetelemente 29 auf. Die Magnetelemente 29 sind insbesondere streifenförmig ausgeführt und in die Bodenwand 13 des Bodenelements 3 eingebettet. Gemäß dem gezeigten Ausführungsbeispiel sind die Magnetelemente 29 entlang der Längskanten 14 und der Frontkante 15 angeordnet. Es ist auch denkbar, entlang der Heckkante 16 zusätzliche Magnetelemente vorzusehen. Anzahl und Form der Magnetelemente kann in Abhängigkeit einer zu erzielenden magnetischen Haltekraft angepasst werden. Insbesondere ist es denkbar, zusätzliche oder alternative Magnetelemente 29 vorzusehen. Insbesondere ist es denkbar, dass mehrere Magnetelemente 29 quer und insbesondere senkrecht zur Längsachse 17 orientiert sind. Vorteilhaft ist es, wenn die Magnetelemente 29 neben der unmittelbaren Befestigung am Dach 8 des Kraftfahrzeugs 2 auch eine Befestigung an unterhalb des Daches 8 angeordneten Rahmenelementen, insbesondere Tragsäulen des Kraftfahrzeugrahmens ermöglichen.

Die Magnetelemente 29 können auch in den vertikal orientierten Seiten-Begrenzungswänden 21 integriert sein. Dadurch ist es möglich, das Bodenelement 3 mit zusätzlicher magnetischer Haltekraft an einer Dachreling 34 zu befestigen. Die Magnetelemente 29 können zusätzlich oder alternativ in einem von dem Profilelement 23 gebildeten, dem Innenraum 9 abgewandten Hohlraum 35 angeordnet sein.

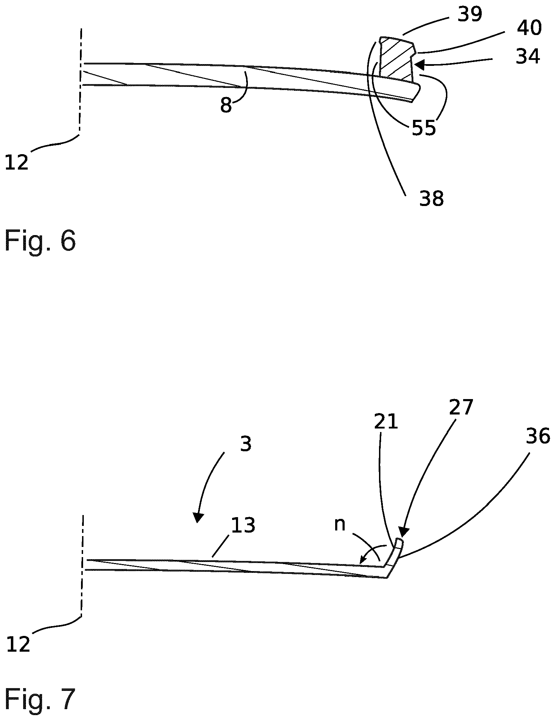

Gemäß dem gezeigten Ausführungsbeispiel weist die Befestigungseinheit weitere Formelemente auf, die an den Seiten-Begrenzungswänden 21 angeordnet sind. Die Formelemente sind derart ausgeführt, dass sie mit der Bodenwand 13 des Bodenelements 3 einen Neigungswinkel n einschließen, der größer ist als 90°. Die Formelemente der Seiten-Begrenzungswände 21 sind gegenüber der Bodenwand 13 nach außen geneigt angeordnet, also dem Innenraum 9 abgewandt. Die nach außen geneigten Formelemente an den Seiten-Begrenzungswänden 21 sind als Klemmlippen 36 ausgeführt. Es ist möglich, dass, wie in Fig. 7 gezeigt, die Seiten-Begrenzungswand 21 insgesamt die Klemmlippe 36 bildet. Es ist alternativ möglich, dass eine Klemmlippe als Abschnitt oder Bereich an der Seiten-Begrenzungswand angeschwenkt ist. In diesem Fall könnte die Seiten-Begrenzungswand 21 im Wesentlichen vertikal angeordnet sein mit einer sich davon geneigt erstreckenden Klemmlippe.

Wesentlich ist, dass die Klemmlippe 36 mit einem freien Ende, also mit einer äußeren Klemmlippenkante 37 klemmend an einem korrespondierenden Vorsprung 38 der Dachreling 34 anliegt. Der Vorsprung 38 ist an einem oberen Ende einer seitlichen Vertiefung 55 angeordnet. Die seitliche Vertiefung 55 ist in Höhenrichtung durch das Dach 8 und den Vorsprung 38 begrenzt. Die seitliche Vertiefung 55 ist insbesondere auch auf einer dem Dachbehälter 1 abgewandten Außenseite der Dachreling 34 vorgesehen. Die Dachreling 34 weist einen mehrfach gewölbten, in einer bevorzugten Ausführung im Wesentlichen T-förmigen Querschnitt in einer Ebene senkrecht zur Längsachse 17 auf. An einer dem Kraftfahrzeugdach 8 abgewandten Oberseite weist die Dachreling 34 einen oberen Steg 39 auf, der beidseitig an einem Vertikalsteg 40 vorsteht. Dadurch, dass die Breite des Vertikalstegs 40 kleiner ist als die Breite des oberen Stegs 38, sind beidseitig Vertiefungen 55 an der Dachreling 34 vorgesehen, wobei sich die Vertiefungen 55 entlang der Längsachse 17 lediglich bereichsweise erstrecken und insbesondere nicht die gleiche Länge aufweisen wie der obere Steg 39. Insbesondere in den Endbereichen, in welchen die Höhe der Dachreling 34 bis auf einen minimalen Wert reduziert ist, weist der Vertikalsteg 40 im Wesentlichen die identische Breite auf wie der obere Steg 39. In diesem Bereich sind keine Vertiefungen angeordnet. Die Vertiefungen der Dachreling 34 sind axial begrenzt.

Wesentlich ist auch, dass die Klemmlippe 36 geeignet ist, einen im Wesentlichen freistehenden Steg einer Dachreling, die insbesondere nur im Front- und Heckbereich des Kraftfahrzeugs 2 mit dem Dach 8 verbunden ist, zu umgreifen. Bei einer derartigen Dachreling 34 ist ein Vertikalsteg 40 nicht vorgesehen. Die Vertiefungen 55 sind nicht sacklochartig ausgeführt, sondern durchgängig. Die seitlichen Vertiefungen 55 sind Durchgangsöffnungen in einer Querrichtung des Kraftfahrzeugs 2.

Die Klemmlippe 36 ist strukturelastisch ausgeführt. Das bedeutet, dass die Materialstärke der Klemmlippe 36 derart dünn ist, dass ein elastisches Einbiegen der Klemmlippe 36 zu der Bodenwand 13 hin möglich ist. Insbesondere ist die elastische Durchbiegung im Wesentlichen unabhängig von dem Material, aus dem die Klemmlippe 36 gefertigt ist, ermöglicht. Dadurch ist es möglich, den Dachbehälter 1 mit dem Bodenelement 3 von oben auf das Kraftfahrzeug 2 aufzusetzen. Ein äußerer Abstand der beiden Klemmkanten 37 der gegenüberliegenden Klemmlippen 36 ist größer als ein innerer Abstand der von den einander zugewandten Innenkanten der oberen Stege 39 der Dachreling 34 vorgegeben ist. Durch das Aufsetzen des Dachbehälters 1 mit dem Bodenelement 3 wird dieses auf das Kraftfahrzeugdach aufgerastet und mit den Klemmlippen 36 in die seitlichen Vertiefungen 55 der Dachreling 34 verrastet, indem die Klemmlippenkanten 37 an den Vorsprüngen 38 der Vertiefungen 55 klemmend anliegen.

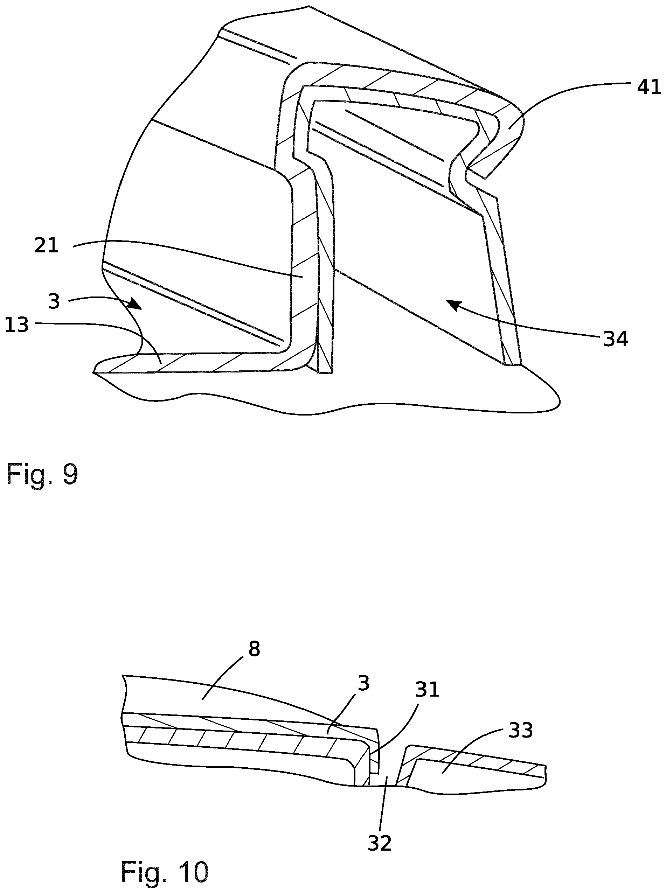

In einer alternativen Ausführungsform gemäß Fig. 9 können die Formelemente, die an den Seiten-Begrenzungswänden 21 integriert angeformt sind, eine der Dachreling 34 entsprechende Profilgeometrie 41 aufweisen. Dadurch ist eine Haltekraft des Dachbehälters 1 am Kraftfahrzeugdach 8 verbessert. Die Bodenwand 13 ist vorteilhaft am Kraftfahrzeugdach befestigt und ergibt ein ästhetisch ansprechendes Gesamtbild. Der auf das Dach 8 aufgesetzte Dachbehälter ergibt zusammen mit dem Dach 8 eine einheitliche Erscheinungsform. Der aufgesetzte, abnehmbare Dachbehälter 1 wird nicht als zusätzliches Element wahrgenommen.

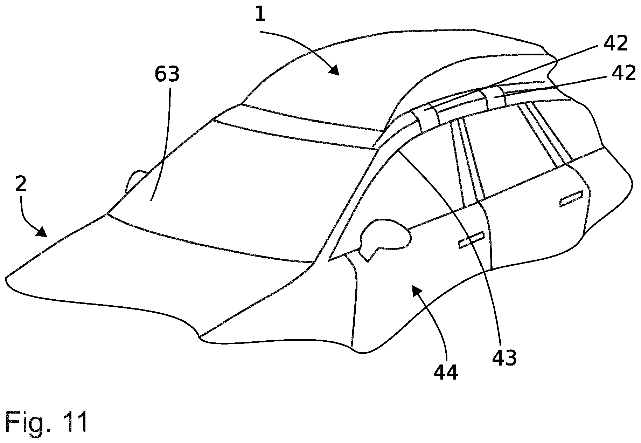

Die Befestigungseinheit kann weitere Klemmelemente 42 aufweisen, die in Fig. 11 dargestellt sind. Die Klemmelemente 42 sind insbesondere jeweils als Klemmband ausgeführt. Das Klemmband ist mit einem ersten Ende am Dachbehälter 1, insbesondere am Bodenelement 3 und insbesondere an der Bodenwand 13 festgelegt. Über eine beispielsweise schlitzförmige Öffnung, die insbesondere in der Seiten-Begrenzungswand 21 integriert sein kann, ist das Klemmelement 42 aus dem Dachbehälter 1 herausgeführt. Ein zweites, dem ersten Ende gegenüberliegend angeordnetes Ende des Klemmelements 42 weist ein nicht dargestelltes Ankerelement auf, das eine gegenüber dem Klemmelement 42 vergrößerte Dicke aufweist. Das Ankerelement ist insbesondere als Verdickung des Klemmbands ausgeführt. Das Klemmelement 42 kann in einem Türspalt 43 der Autotür 44 und/oder Heckklappe eingeklemmt werden. Das Klemmelement 42 ist insbesondere ein flexibles Band.

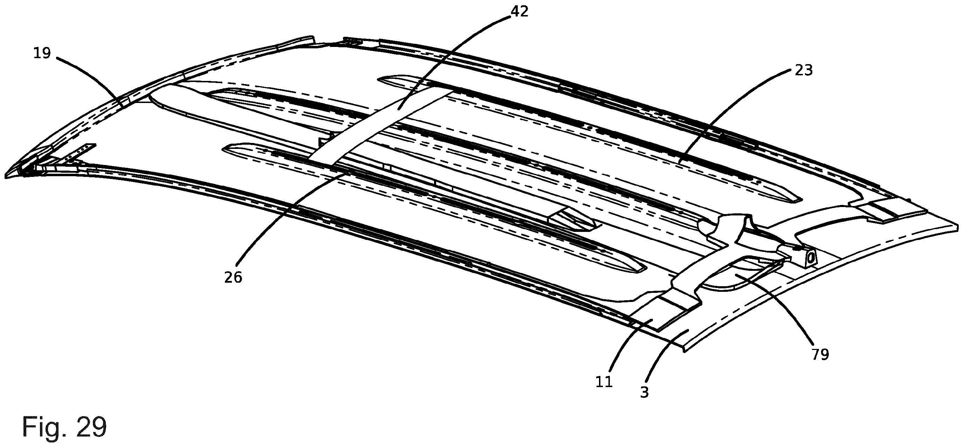

Analog zu einem Anschnallgurt kann das Klemmelement 42 als ein quer und/oder längs durch den Innenraum 9 des Dachbehälters 1 und/oder durch das Bodenelement 3 des Dachbehälters 1 durchgehender Gurt ausgeführt sein. Das Klemmelement 42 ist insbesondere entsprechend einem modernen Fahrzeuggurt ausgeführt. Beispielsweise kann in Abhängigkeit einer Fahrgeschwindigkeit des Kraftfahrzeugs ein automatisiertes Nachspannen des Klemmelements 42 erfolgen. Zusätzlich oder alternativ kann ein Klemmelement-Schloss vorgesehen sein, in dem das Klemmelement verschließbar, ähnlich einem Gurtschloss, anordenbar ist. In der verschlossenen Anordnung des Klemmelements in dem Klemmelement-Schloss kann ein Freigabesignal von dem Klemmelement-Schloss erzeugt und insbesondere an einen Bordcomputer des Kraftfahrzeugs 2, insbesondere kabellos, übermittelt werden. Beispielsweise ist es denkbar, die Armaturentafel des Kraftfahrzeugs mit einer zusätzlichen Signalanzeige für das zuverlässige Schließen des Klemmelements auszurüsten. Der Gurt kann beispielsweise zur Gepäckarretierung, insbesondere von Skiern 79, verwendet werden, wie dies in Fig. 29 dargestellt ist. Ein Ski 79 ist mittels des Klemmelements 42 in Form eines Klemmgurts an dem Bodenelement 3 gehalten. Das Klemmelement 42 ist durch die Langlöcher 26 der Profilelemente 23 zu einer Unterseite des Bodenelements 3 bzw. in den von den Profilelementen 23 gebildeten Hohlraum 35 geführt. In dem Hohlraum können die Gurtschlösser angeordnet sein. Entlang der Langlöcher 26 bzw. entlang der Profilelemente 23, können mehrere Klemmelemente 42 zur Sicherung des Skis 79 angeordnet sein.

Zusätzlich können Sensoren im Bodenelement 3 angeordnet sein, die erfassen, ob ein Gegenstand in dem Dachbehälter 1 bzw. auf dem Bodenelement 3 angeordnet ist. Derartige Sensoren werden beispielsweise im Fahrzeugsitz zur Erfassung einer Person auf dem Sitz verwendet. Sofern ein Gegenstand in dem Dachbehälter angeordnet, aber nicht mittels des Halteelements 42 verankert ist, kann ein Warnsignal an den Fahrer im Kraftfahrzeug übermittelt werden und der Fahrer zur Ladungssicherung aufgefordert werden. Die Sensoren sind insbesondere im Bodenelement 3 integriert.

Der Gurt kann in den Klemmspalten 32, 43 eingeklemmt und somit verankert werden. Insbesondere ist das Band wasserabweisend. Insbesondere sind an dem Dachbehälter 1 vier Klemmelemente 42 vorgesehen, jeweils zwei an den Seiten-Begrenzungswänden 21.

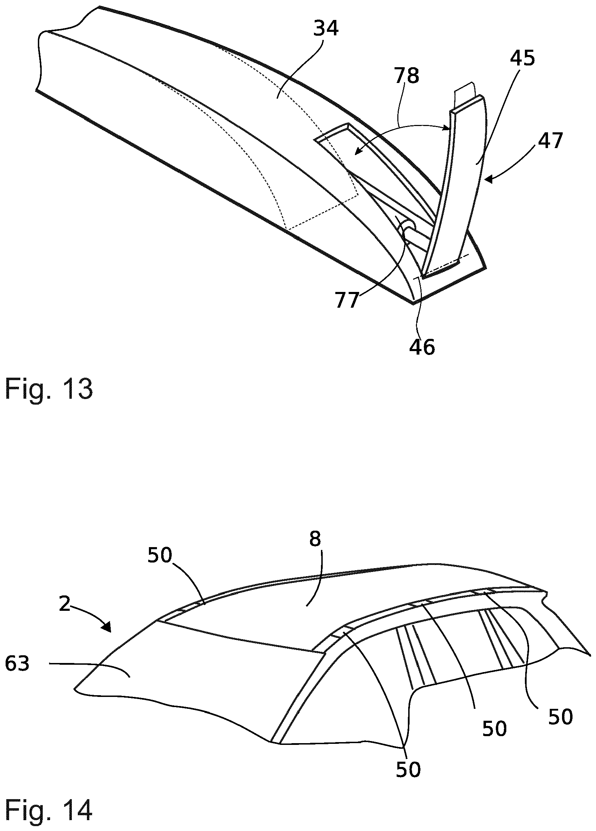

Der Dachbehälter 1, insbesondere das Bodenelement 3 und insbesondere die Bodenwand 13, weisen eine Schutzbefestigung 48 in Form von nicht dargestellten Befestigungsschrauben auf, die durch Befestigungsöffnungen 49 gesteckt und zum unmittelbaren Verschrauben an Befestigungsstellen 50 gemäß Fig. 14 an einem Kraftfahrzeugdach 8 dienen. Derartige Befestigungsstellen 50 sind insbesondere bei Kraftfahrzeugen 2 vorgesehen, die keine Dachreling aufweisen. Derartige Befestigungsstellen 50 sind im Kraftfahrzeugdach 8 integriert. Die Befestigungsstellen 50 weisen insbesondere Aufnahmeschraubgewinde auf, in die die Befestigungsschrauben eingeschraubt werden können. Die Befestigungsöffnungen 49 sind insbesondere nur bei geöffnetem, also nicht verschlossenem Dachbehälter 1 zugänglich. Die Schutzbefestigung 48 stellt einen Diebstahlschutz dar.

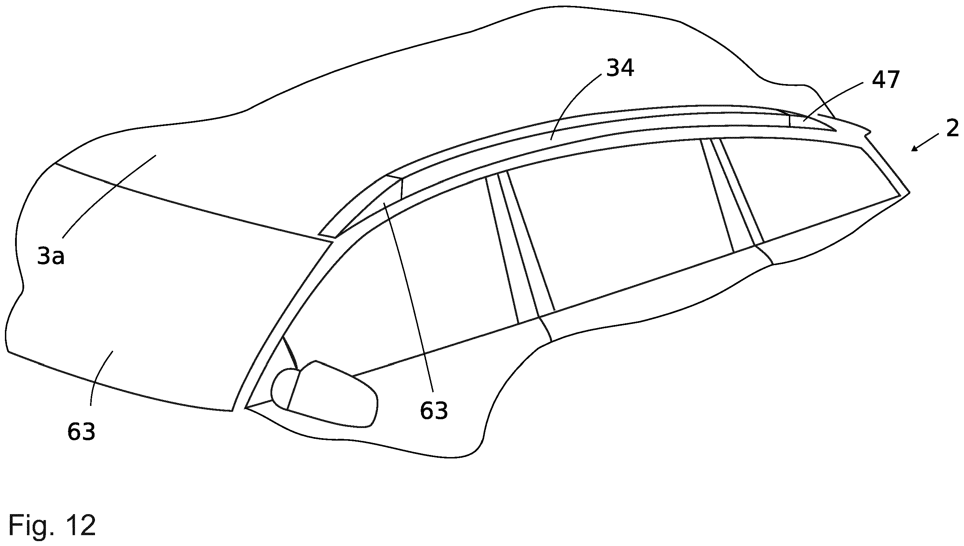

Im Folgenden wird unter Bezugnahme auf Fig. 12 und 13 ein weiteres Ausführungsbeispiel der Erfindung beschrieben. Konstruktiv identische Teile erhalten dieselben Bezugszeichen wie bei dem ersten Ausführungsbeispiel, auf dessen Beschreibung hiermit verwiesen wird. Konstruktiv unterschiedliche, jedoch funktionell gleichartige Teile erhalten dieselben Bezugszeichen mit einem nachgestellten a.

Der wesentliche Unterschied des Dachbehälters 1a besteht darin, dass das Bodenelement 3a einen vorderen Bereich und einen hinteren Bereich aufweist, in welchen das Bodenelement 3a sich im Wesentlichen über die gesamte Breite des Dachs 8 des Kraftfahrzeugs 2 erstreckt. Insbesondere ist die Breite des Bodenelements 3a senkrecht zur Längsachse 17 größer als ein Abstand der Dachreling 34 des Kraftfahrzeugs 2. Dadurch ist es möglich, zusätzlichen Stauraum für den Dachbehälter 1a zu erschließen, da sich der Dachbehälter 1a über die gesamte Dachfläche, insbesondere die gesamte Länge des Dachs 3 erstrecken kann.

Um diesen Dachbehälter 1a, insbesondere das Bodenelement 3a zusätzlich zu befestigen, kann die Befestigungseinheit mehrere Rasthebel 45 aufweisen. Der Rasthebel 45 ist um eine Schwenkachse 46 in einem Rasthebelgehäuse 47 entlang einer Schwenkrichtung 78 schwenkbar angeordnet. Das Rasthebelgehäuse 47 ist im Wesentlichen keilförmig ausgeführt und an die Form der am Kraftfahrzeug 2 vorhandenen Dachreling 34 angepasst. In einer verrasteten Position ist der Rasthebel 45 in oder an dem Rasthebelgehäuse 47 angeordnet. Der Rasthebel 45 ist über Rastelemente an dem Rastelementgehäuse 47 und/oder der Dachreling 34 verrastend angeordnet. In der verrasteten Anordnung des Rasthebels 45 ist der Dachbehälter 1a zusätzlich an der Dachreling 34, insbesondere entlang einer Fahrrichtung, fixiert.

Für die Schwenkbewegung des Rasthebels 45 um die Schwenkachse 46 ist ein Aktuator 77 vorgesehen. Gemäß dem gezeigten Ausführungsbeispiel ist der Aktuator 77 als Kolben-Zylinder-Einheit dargestellt, insbesondere in Form eines Pneumatikzylinders. Der Pneumatikzylinder 77 kann mittels eines Antriebs betätigt, also automatisiert ausgefahren werden. Es ist auch denkbar, dass der Aktuator 77 federgelagert ausgeführt ist und bei manuellem Betätigen des Rasthebels 45 dieser aus einer verriegelten Anordnung gemäß Fig. 12 freigibt und aufgrund der vorgespannten Feder die in Fig. 13 ausgeklappte Position schiebt. Dazu ist der Aktuator 77 mit einem freien Ende unmittelbar am Rasthebel 45 angelenkt. Der Anlenkungspunkt ist beabstandet von der Schwenkachse 46, um ein Drehmoment auf den Rasthebel 45 um die Schwenkachse 46 zu ermöglichen. Die Kolben-Zylinder-Einheit kann auch als Hydraulikzylinder ausgeführt sein. Es sind auch alternative Antriebe, beispielsweise ein Spindelantrieb denkbar.

Der Rasthebel 54 kann auch als Rastschraube oder Rastelement mit einem Drehverschluss ausgeführt sein, um die verrastende Position in oder an dem Rasthebelgehäuse 47 zu gewährleisten.

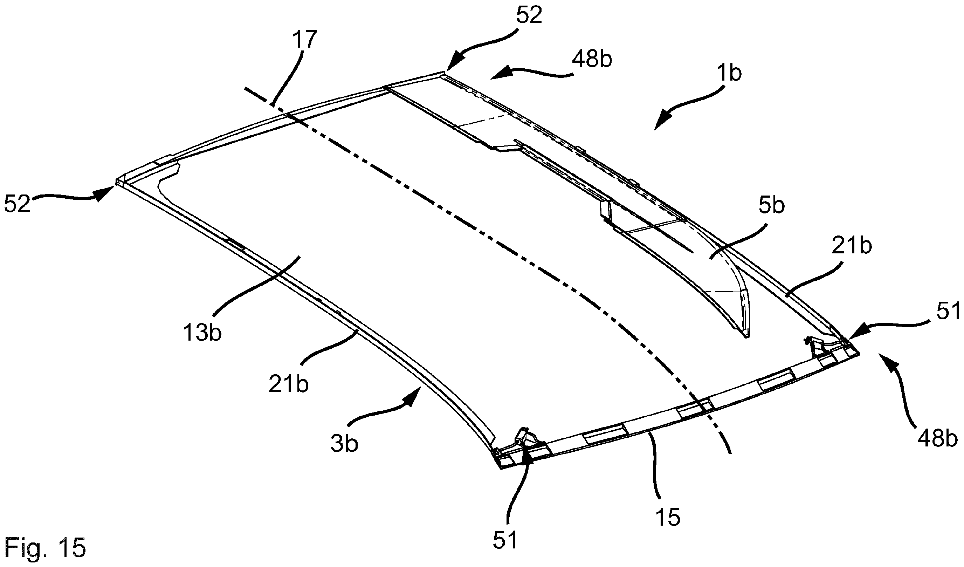

Im Folgenden wird unter Bezugnahme auf Fig. 15 bis 19 ein weiteres Ausführungsbeispiel der Erfindung beschrieben. Konstruktiv identische Teile erhalten dieselben Bezugszeichen wie bei den vorherigen Ausführungsbeispielen, auf deren Beschreibung hiermit verwiesen wird. Konstruktiv unterschiedliche, jedoch funktionell gleichartige Teile erhalten dieselben Bezugszeichen mit einem nachgestellten b.

Der wesentliche Unterschied gegenüber den vorherigen Ausführungsbeispielen besteht darin, dass bei dem Dachbehälter 1b die Schutzbefestigung 48b zusätzliche Verriegelungselemente 51, 52 aufweist. Die Verriegelungselemente 51, 52 sind jeweils an den Seiten-Begrenzungswänden 21 angeordnet. Die Verriegelungselemente 51, 52 sind seitlich, also quer und insbesondere senkrecht zur Längsachse 17, verlagerbar.

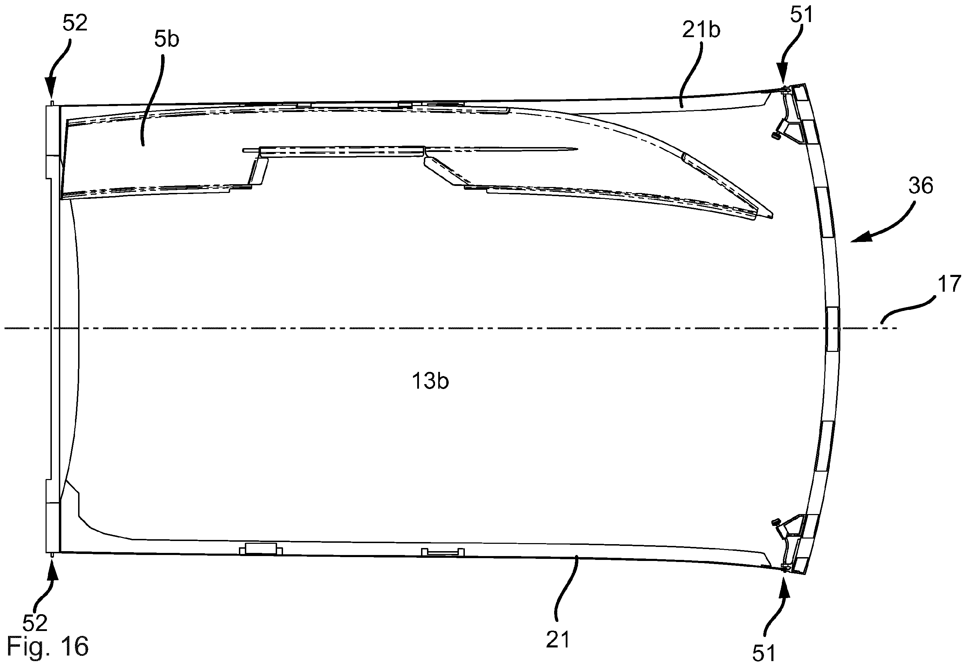

Insbesondere aus der Draufsicht in Fig. 16 wird die platzsparende Anordnung des Dachbehälters 1b im zusammengefalteten Zustand deutlich. Im zusammengefalteten Zustand sind die Seitenwände in einer im Wesentlichen horizontalen Anordnung. Die Seitenelemente sind auf das Bodenelement geklappt. Die Seitenelemente liegen im Wesentlichen flächig am Bodenelement auf. Dies gilt gleichermaßen für die Rückwand 6 und die Deckelwand 7 und den Rahmen 11.

In dem eingefalteten Zustand sind die genannten Elemente aufeinanderliegend, also schichtweise übereinander angeordnet. Zwischen den faltbaren Elementen des Dachbehälters 1 ist im Wesentlichen kein Zwischenraum vorgesehen.

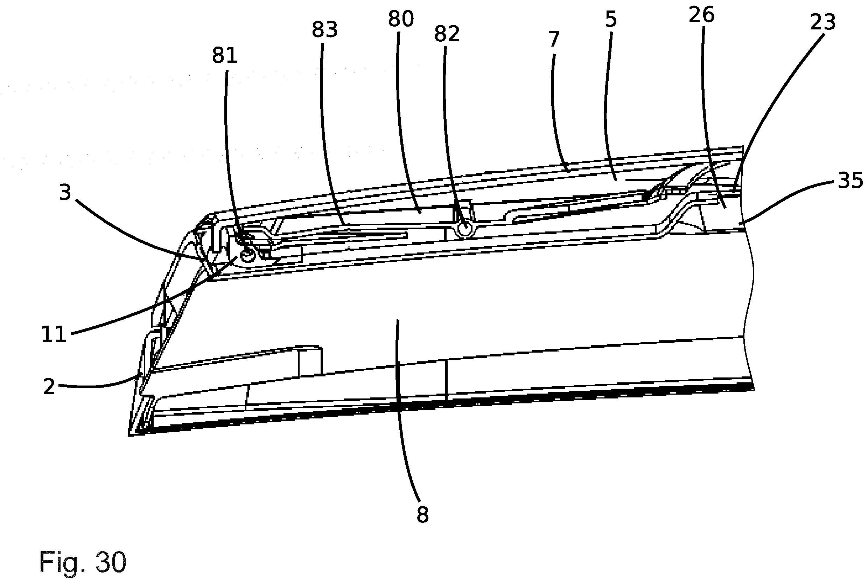

Fig. 30 zeigt eine Querschnittsdarstellung des Dachbehälters 1 in einer zusammengefalteten Anordnung. In dem zusammengefalteten Zustand ist ein klappbares, kleines Seitenwandelement 80, das Bestandteil der Seitenwand 5 ist, mehrlagig zusammengefaltet. Das Seitenwandelement 80 weist ein erstes Scharnier 81 und ein zweites Scharnier 82 mit jeweils einer Scharnierachse auf. Mit dem ersten Scharnier 81 ist das Seitenwandelement 80 am Rahmen 11 schwenkbar angelenkt. Das zweite Scharnier 82 verbindet das erste Scharnier 81 mit einem weiteren Wandelement 83, das mit der Seitenwand 5 verbunden ist. In der zusammengefalteten Anordnung gemäß Fig. 30 sind die beiden Scharniere 81, 82 im Wesentlichen auf einer Horizontalebene angeordnet.

Durch Aufklappen wird das erste Scharnier 81 im Gegenuhrzeigersinn gemäß Fig. 30 geschwenkt. Das zweite Scharnier 82 wird im Uhrzeigersinn geschwenkt. In der aufgefalteten Anordnung liegen die Scharniere 81, 82 mit ihren jeweiligen Scharnierachsen im Wesentlichen in einer Vertikalebene, sodass das zweite Scharnier 82 im Wesentlichen senkrecht oberhalb des ersten Scharniers 81 angeordnet ist.

Die Scharniere 81, 82 weisen jeweils einen rohrförmigen Hohlraum auf, in dem zusätzliche Funktionen integriert sein könnten wie beispielsweise ein Einrastmechanismus für das Seitenwandelement 80 und/oder ein Aufstellmechanismus, insbesondere einen Antrieb, für die Deckelwand 7.

Die Scharniere 81, 82 können auch in einer anderen Weise, insbesondere in Form eines Filmscharniers, ausgeführt sein.

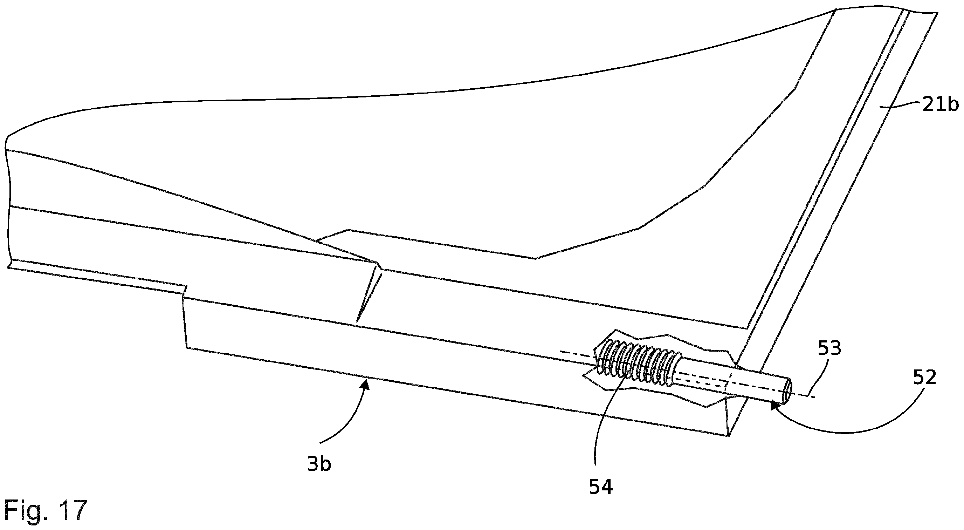

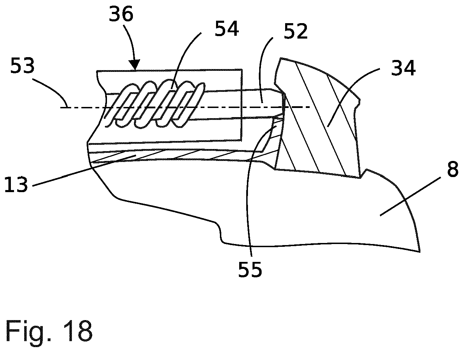

Nachfolgend werden anhand der Fig. 17 und 18 der Aufbau und die Funktion des Verriegelungselements 52 näher erläutert. Das Verriegelungselement 52 ist als federgelagerter Verriegelungsbolzen ausgeführt. Der Verriegelungsbolzen ist entlang einer Verriegelungsachse 53, die quer und insbesondere senkrecht, zur Längsachse 17 orientiert ist, verlagerbar. Der Verriegelungsbolzen ist mittels eines Federelements 54, das in dem Bodenelement 3b integriert angeordnet ist, federbeaufschlagt. In einer unbelasteten Anordnung bewirkt die Federvorspannung des Federelements 54, dass der Verriegelungsbolzen aus der dafür vorgesehenen Ausnehmung am Bodenelement 3b herausgedrückt wird. Der Verriegelungsbolzen 52 steht an der Seiten-Begrenzungswand 21b in der unbetätigten Anordnung über.

Zum Befestigen des Dachbehälters 1b auf dem Dach 8 wird das Bodenelement 3b von oben auf das Dach 8 aufgesetzt. Der Verriegelungsbolzen des Verriegelungselements 52 steht seitlich derart weit an der Seiten-Begrenzungswand 21b über, dass er insbesondere am oberen Steg 39, der Dachreling 34 ansteht. Durch den Kontakt mit der Dachreling 34 wird der Verriegelungsbolzen entgegen der Federkraft entlang der Verriegelungsachse 53 in das Bodenelement 3b hineingedrückt.

Wenn der Dachbehälter 1b mit dem Bodenelement 3b auf dem Dach 8 des Kraftfahrzeugs 2 aufliegt, wie in Fig. 18 dargestellt, wird der Verriegelungsbolzen infolge der Federkraft nach außen, in die seitliche Vertiefung 55 der Dachreling 34 gedrückt. In dieser Anordnung ist der Dachbehälter 1b mit dem Bodenelement 3b zuverlässig auf dem Dach 8 und insbesondere an der Dachreling 34 verrastet.

Eine Entriegelung des Verriegelungsbolzens ist ohne Weiteres nicht möglich. Eine Entriegelung ist beispielsweise über einen nicht dargestellten, im Innenraum 9 des Dachbehälters 1b angeordnetem Entriegelungshebel derart denkbar, dass der Verriegelungsbolzen zurück in die dafür vorgesehene Bohrung entlang der Verriegelungsachse 53 gezogen wird. Wenn das Verriegelungselement 52 mit dem Verriegelungsbolzen außerhalb der seitlichen Vertiefung 55 angeordnet ist, kann der Dachbehälter 1b mit dem Bodenelement 3b vom Dach des Kraftfahrzeugs 2 abgenommen werden.

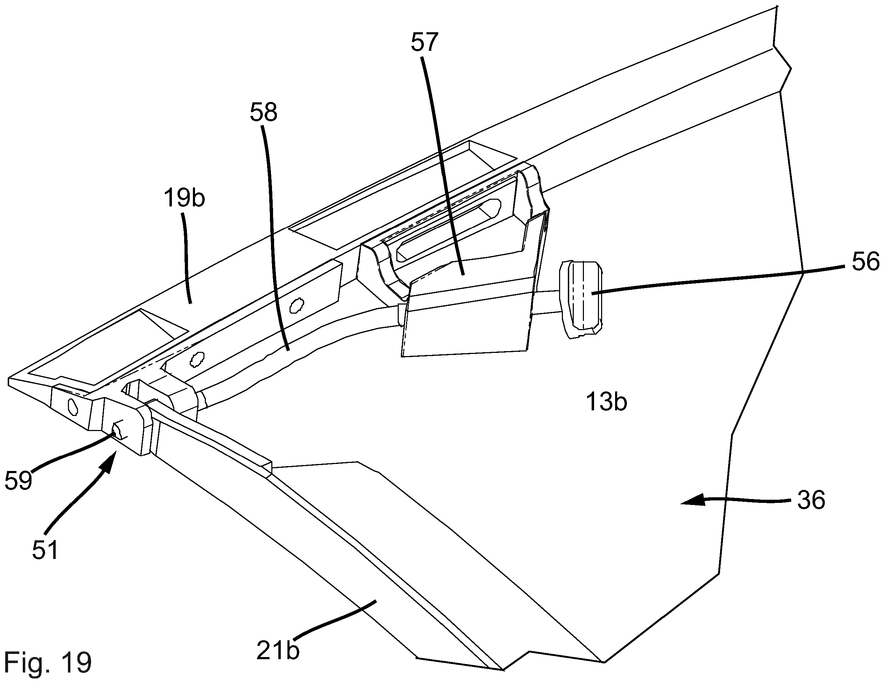

Nachfolgend werden anhand von Fig. 19 Aufbau und Funktion des Verriegelungselements 51 näher erläutert. Das Verriegelungselement 51 weist ein Betätigungselement 56 in Form eines Drehknopfes auf. Das Betätigungselement 56 ist in einer Halteanordnung 57 aufgenommen. In der Halteanordnung 57 ist ein Spindeltrieb angeordnet, der eine flexible Spindel 58 aufweist. Die flexible Spindel 58 ist aus der Halteanordnung 57 herausgeführt und weist an einem der Halteanordnung 57 gegenüberliegenden Ende einen Verriegelungsbolzen 59 auf.

Das Betätigungselement 56 mit der Halteanordnung 57 ist im Innenraum 9 des Dachbehälters 1b angeordnet. Gemäß dem gezeigten Ausführungsbeispiel ist die Halteanordnung 57 einteilig mit der Front-Begrenzungswand 19b ausgeführt. Die Halteanordnung 57 ist beabstandet zu der Front-Begrenzungswand 19b angeordnet. Die flexible Spindel 58 ist entlang einer gekrümmten Bahn angeordnet, sodass der Verriegelungsbolzen 59 benachbart zu der Front-Begrenzungswand 19b angeordnet sein kann. Ein Längsabstand, also ein Abstand entlang der Längsachse 17 von dem Verriegelungsbolzen 59 zu der Front-Begrenzungswand 19b ist kleiner als ein Längsabstand von der Halteanordnung 57 zu der Front-Begrenzungswand 19b.

Durch eine Betätigung des Betätigungselements 56, also durch Drehen des Drehknopfes, wird der Spindeltrieb aktiviert und die flexible Spindel 58 ausgefahren. Entsprechend wird der Verriegelungsbolzen 59 in einer Richtung quer und insbesondere senkrecht zur Längsachse 17 gegenüber der Seiten-Begrenzungswand 21b nach außen verlagert. Der Verriegelungsbolzen 59 kann ähnlich wie der Verriegelungsbolzen des Verriegelungselements 52 in die seitliche Vertiefung 55 der Dachreling 34 eingreifen. Im Gegensatz zu dem Verriegelungselement 52 wird der Verriegelungsbolzen 59 kontinuierlich seitlich verlagert durch die Betätigung des Betätigungselements 56. Der Verriegelungsbolzen 59 ist im Wesentlichen eine Verriegelungsschraube, die an die Dachreling 34 angeschraubt wird. Die Verriegelungsschraube legt insbesondere eine Schwenkachse eines Scharniers fest, das das Bodenelement 3 und die Deckeleinheit 4 verbindet. An dem Scharnier ist die Deckeleinheit 4 mit dem Rahmen 11 schwenkbar am Bodenelement 3 angelenkt. Die Scharnierachse entspricht der Verriegelungsachse 53. Die Verriegelungsachse 53 ist im Frontbereich der Bodenwand 13 angeordnet. Durch ein Auf- und Zuschwenken der Deckeleinheit 4 gegenüber dem Bodenelement 3 um die Verriegelungsachse 53 kann der Dachbehälter 1 geöffnet bzw. geschlossen werden.

Alternativ ist es denkbar, dass an der Dachreling 34 seitliche Verriegelungsöffnungen vorgesehen sind, in die der Verriegelungsbolzen 59 oder der Verriegelungsbolzen des Verriegelungselements 52 eingreifen kann.

Die Verriegelungselemente 51, 52 dienen dem Diebstahlschutz. Die Schutzbefestigungen sind insbesondere innenliegend, also im Innenraum 9, des Dachbehälters 1b angeordnet und nur bei geöffnetem Dachbehälter 1b zugänglich.

Alternativ kann zur Entriegelung des Verriegelungselements 52 auch ein Bowdenzugsystem vorgesehen sein, das in Fig. 15 bis 19 nicht dargestellt ist. Ein derartiges Bowdenzugsystem könnte beispielsweise mit einer ebenfalls nicht dargestellten Schlosseinheit verbunden sein, um beispielsweise bei Betätigen des Schlosses, also bei Aufschließen des Dachbehälters 1b ein Entriegeln des Dachbehälters 1b ermöglichen zu können. Dazu kann eine explizite Schlüsselstellung in Schloss vorgesehen sein.

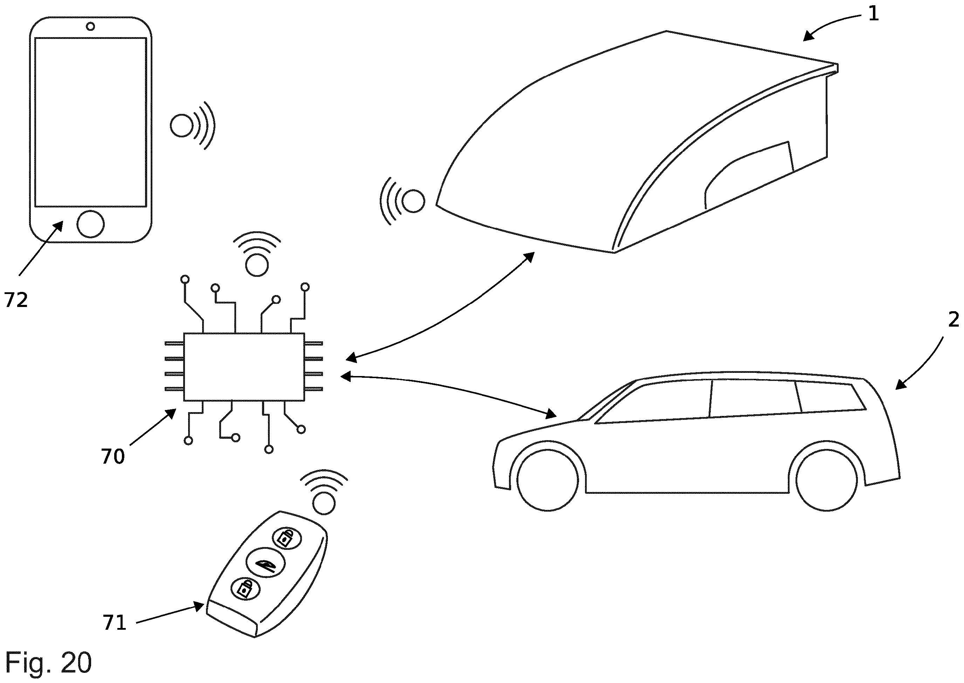

Gemäß einer weiteren, in Fig. 20 gezeigten, Alternative ist es möglich, die Entriegelung des Verriegelungselements ferngesteuert zu ermöglichen. Dazu ist ein Empfängermodul 70 vorgesehen, das insbesondere in dem Dachbehälter 1 integriert ist. Das Empfängermodul 70 ist geeignet, drahtlose Signale zu empfangen. Ein drahtloses Signal kann beispielsweise von einem Funkschlüssel 71 oder einem mobilen Endgerät 72, beispielsweise einem Smartphone und/oder einem Tablet-Computer, ausgesendet werden.

Das Empfängermodul 70 ist insbesondere mit einem Antrieb zum automatisierten Öffnen, also Auffalten, des Dachbehälters 1 in Signalverbindung. Diese Signalverbindung mit dem Antrieb des Dachbehälters 1 kann kabelgebunden und/oder kabellos erfolgen. Es ist auch denkbar, dass das Empfängermodul 70 im Kraftfahrzeug 2 integriert angeordnet ist. Insbesondere kann ein Empfängermodul 70 in dem Kraftfahrzeug 2 genutzt werden, das ohnehin bereits mit einem Funkschlüssel 71 kommuniziert. Eine Betätigung des Schlosses ist also mittels eines Öffnungselements möglich, das insbesondere als Funkschlüssel 71 oder mobiles Endgerät 72 ausgebildet sein kann. Das dafür erforderliche Empfängermodul 70 kann vorteilhafterweise im Bordcomputer des Kraftfahrzeugs 2 integriert oder mit diesem kommunizierend ausgeführt sein.

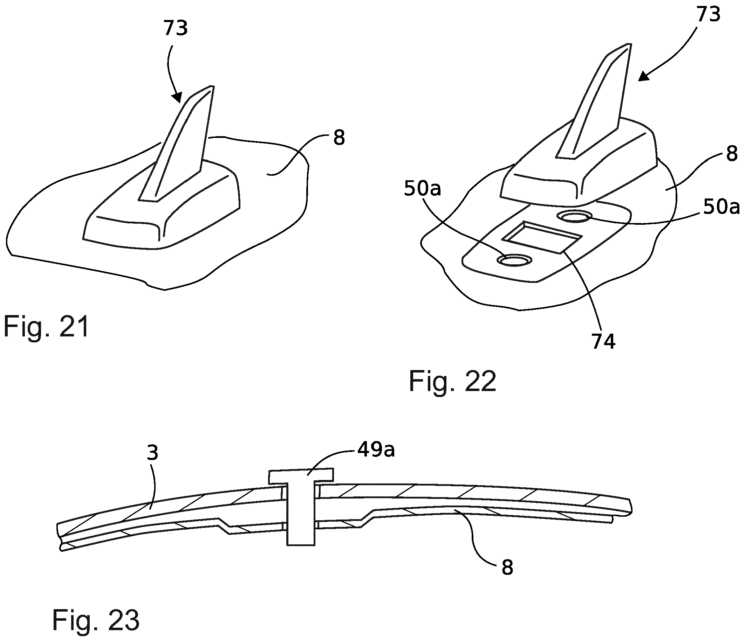

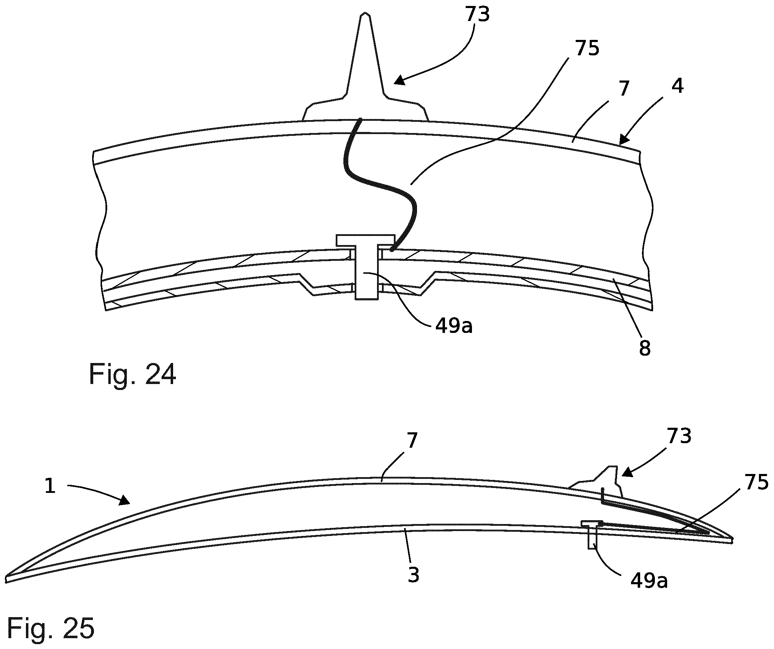

Zusätzlich oder alternativ zu den Befestigungsstellen 50 gemäß Fig. 14 können weitere Befestigungsstellen 50a am Kraftfahrzeugdach 2 vorgesehen sein. Bei dem in Fig. 21 bis 25 gezeigten Ausführungsbeispiel ist die Kraftfahrzeugantenne 73 am Kraftfahrzeugdach 8 angeschraubt. Dazu dienen die in Fig. 23 dargestellten Befestigungsstellen 50a, die als Gewindebohrungen ausgeführt sind. Die Gewindebohrungen weisen jeweils eine Öffnung mit Innengewinde auf, in die nicht dargestellte Antennenschrauben eingeschraubt werden können. Gemäß Fig. 23 ist zwischen den Befestigungsstellen 50a eine Durchgangsöffnung am Kraftfahrzeugdach 8 vorgesehen. Die Durchgangsöffnung 74 dient beispielsweise zur Durchführung von Kabeln von der Antenne zum Kraftfahrzeug 2, beispielsweise zur Signalübertragung.

Es wurde erkannt, dass es vorteilhaft sein kann, die Befestigungsstellen 50a der Antenne 73 zur Befestigung des Dachbehälters 1 zu nutzen. Dazu werden die nicht dargestellten Antennenschrauben gelöst und die Antenne 73 vom Kraftfahrzeugdach 8 abgenommen. Die Befestigungsstellen 50a liegen nun frei. In die Befestigungsstellen 50a kann eine Befestigungsschraube in Form eines Befestigungselements 49a eingeschraubt werden, um den Dachbehälter 1 mit einem Bodenelement 3 am Kraftfahrzeugdach zu befestigen.

Um die Funktionalität der Antenne 73 zu gewährleisten, ist diese mit einem Signalkabel 75 mit der Befestigungsschraube 49a unmittelbar verbunden. Um eine im Wesentlichen störungsfreie Nutzung des Innenraums des Dachbehälters 1 zu gewährleisten, ist das Signalkabel 75 an einer Innenseite der Deckeleinheit 4, insbesondere der Deckelwand 7, in den Heckbereich des Dachbehälters 1 geführt und entlang des Bodenelements 3 von dem Eckbereich zu der Befestigungsschraube 49a.

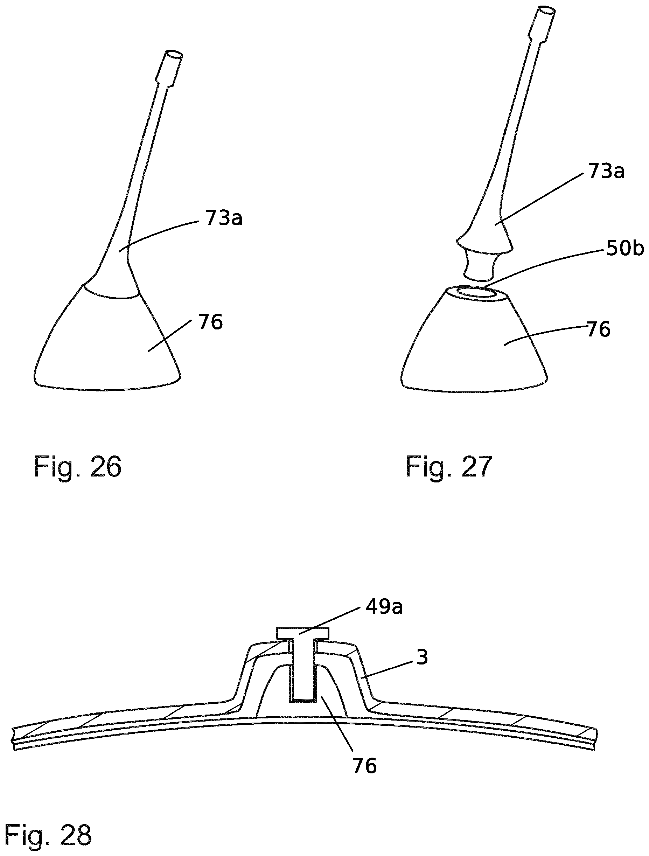

Die Befestigung des Dachbehälters 1 bei einer Antenne 73a gemäß einer weiteren, in Fig. 26 bis 28 gezeigten Ausführungsform erfolgt analog. Der wesentliche Unterschied gegenüber der Antenne 73 besteht darin, dass die Antennenschraube integraler Bestandteil der abnehmbaren Antenne 73a ist.

Die Befestigungsstelle 50b ist als Gewindebohrung ausgeführt. Die Gewindebohrung ist an einer Oberseite eines Antennensockels 76 ausgeführt. Der Antennensockel ist eine sockelartige Erhebung auf dem Dach 8 des Kraftfahrzeugs. Entsprechend ist es erforderlich, dass das Bodenelement 3 des Dachbehälters 1 eine dem Antennensockel 76 korrespondierende Ausnehmung aufweist. Im Bereich dieser Ausnehmung ist eine Durchgangsöffnung vorgesehen, durch die die Befestigungsschraube 49a zum Befestigen des Bodenelements 3 an der Befestigungsstelle 50b genutzt werden kann.

Es ist möglich, den Dachbehälter zur Energiespeicherung und/oder -versorgung von elektronischen Verbrauchern zu nutzen. Beispielsweise können an einer Oberseite des Dachbehälters, insbesondere an einer Oberseite der Deckeleinheit, insbesondere an einer Oberseite des Deckelelements, Solarzellen angebracht sein, um elektrischen Strom zu erzeugen. Dieser elektrische Strom kann beispielsweise mittels einer Energiespeichereinheit, insbesondere eines Akkumulators, gespeichert werden. Die Energiespeichereinheit kann beispielsweise in der Front-Begrenzungswand 19 platzsparend integriert angeordnet sein, wie dies in Fig. 29 gezeigt ist. Die Energiespeichereinheit kann im Dachbehälter integriert sein. Es ist auch denkbar, dass ein Ackumulator genutzt wird, der im Kraftfahrzeug ohnehin vorhanden ist. Zu diesem Zweck ist eine Energieübertragungsschnittstelle zwischen dem Dachbehälter und dem Kraftfahrzeug vorgesehen. Die Energieschnittstelle ist insbesondere durch induktive Übertragung ausgeführt.

Insbesondere ist der Dachbehälter derart ausgeführt, dass er energieneutral hinsichtlich des Kraftfahrzeugs betreibbar ist. Energieneutral bedeutet, dass sämtliche elektrische Energie, die für mögliche Energieverbraucher des Dachbehälters, wie beispielsweise das Anzeigeelement, das Schloss, das automatisierte Auf- und Zufalten des Dachbehälters, insbesondere die dafür erforderlichen Antriebe, und/oder die Steuereinheit für das autonome Fahren, mittels der elektrischen Energie versorgt werden, die von den Solarzellen erzeugt und/oder in der Speichereinheit zwischengespeichert werden. Die elektronischen Verbraucher sind insbesondere unmittelbar mit den Solarzellen und/oder mit der Speichereinheit verbunden.

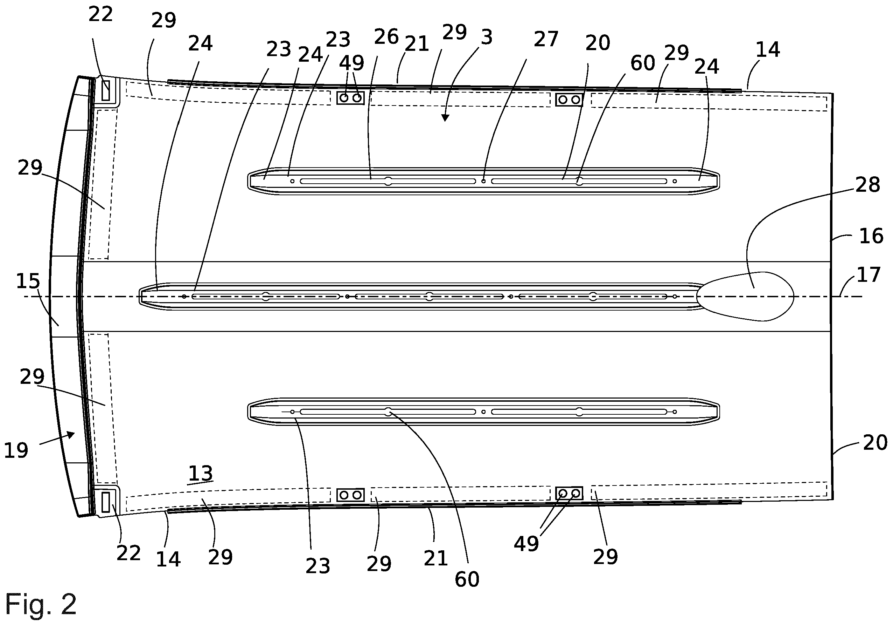

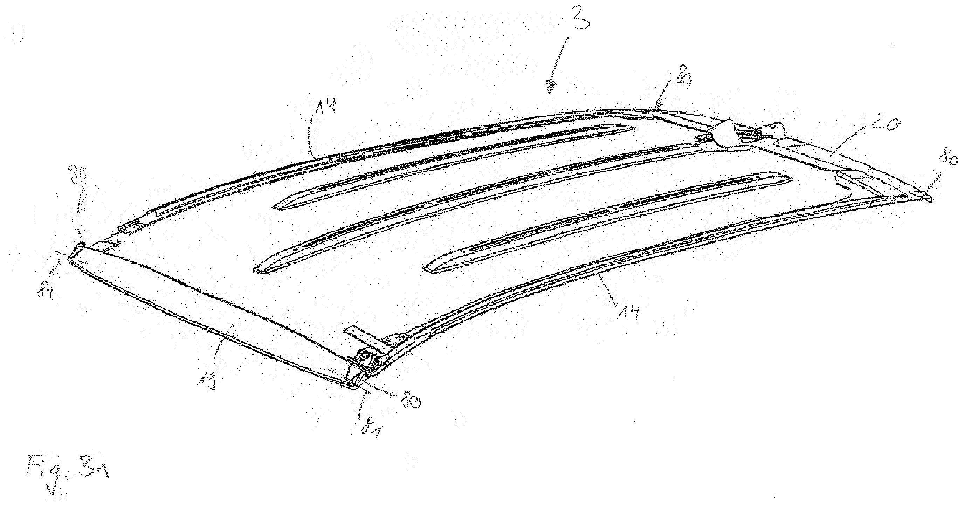

Nachfolgend wird anhand von Fig. 31 eine weitere Ausführungsform eines Bodenelements 3 beschrieben. Das Bodenelement 3 entspricht im Wesentlichen dem in Fig. 2 gezeigten.

Das Bodenelement 3 weist vier Aushebelaschen 80 auf, die jeweils in den Eckenbereichen des Bodenelements 3 um eine Schwenkachse 81 schwenkbar angelenkt sind. Jeweils zwei Aushebelaschen 80 sind an der Front-Begrenzungswand 19 beziehungsweise an der Heck-Begrenzungswand 20, jeweils in einem seitlichen Außenbereich angeordnet. Es können auch mehr oder weniger als vier Aushebelaschen 80 vorgesehen sein. Die Aushebelaschen können auch im Bereich der Längskanten 14 des Bodenelements 3 angeordnet sein.

Die Aushebelaschen 80 sind im Wesentlichen ringförmig ausgeführt. Die Aushebelaschen 80 können einen Greifabschnitt aufweisen, der das Greifen der Aushebelaschen 80 mit zwei oder mehr Fingern vereinfacht. Die Aushebelaschen 80 können im Bereich des Greifabschnitts gepolstert ausgeführt sein, damit ein Nutzer bequem den Greifabschnitt der Aushebelaschen 80 greifen und daran ziehen kann. In Fig. 31 sind die Aushebelaschen 80 in einer an dem Bodenelement 3 anliegenden Position angeordnet. In dieser Position sind die Aushebelaschen inaktiv und platzsparend am Bodenelement 3 angeordnet.

Die Aushebelaschen 80 dienen zum erleichterten Anheben des Bodenelements 3, also um das Bodenelement 3 vom Dach des Kraftfahrzeugs zu entfernen. Dazu können die Aushebelaschen 80 um die jeweilige Schwenkachse 81 vom Bodenelement 3 weggeklappt werden, bis sie im Wesentlichen senkrecht zu einer von dem Bodenelement 3 gebildeten Ebene angeordnet sind. In dieser Anordnung kann ein Nutzer das Bodenelement 3 und insbesondere den Dachbehälter 1 an den Aushebelaschen 80 vom Kraftfahrzeugdach abheben. Der Kraftaufwand zum Entfernen des Bodenelements 3 vom Kraftfahrzeugdach ist für einen Nutzer reduziert. Die Handhabung ist vereinfacht. Die Gefahr einer unbeabsichtigten Beschädigung des Kraftfahrzeugdachs beim Abnehmen des Dachbehälters ist reduziert.

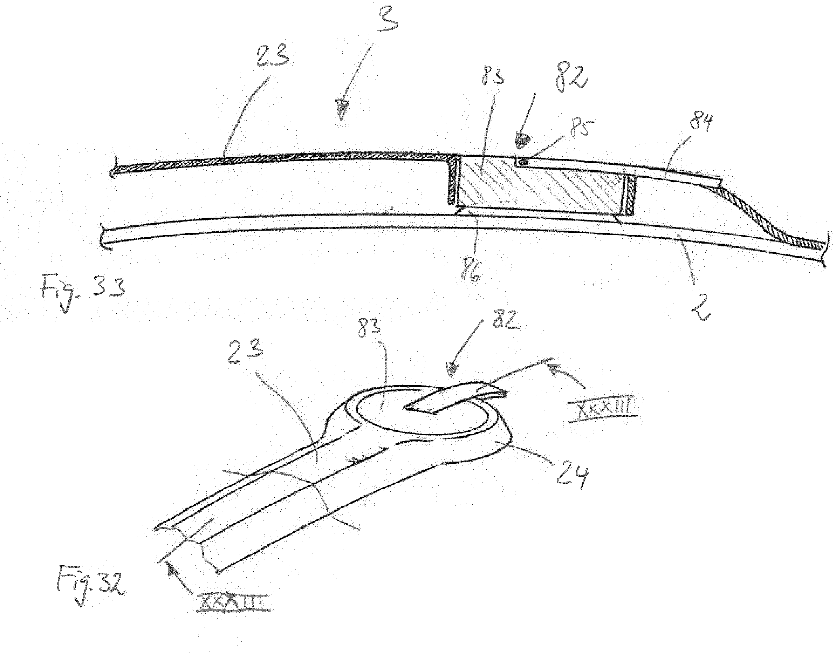

Nachfolgend wird anhand von Fig. 32 und Fig. 33 eine weitere Ausführungsform eines Bodenelements 3 näher erläutert. Bei dem Bodenelement 3 ist in mindestens eines der Profilelemente 23 ein Saugnapfelement 82 integriert. Das Saugnapfelement 82 ist Bestandteil der Befestigungseinheit, mittels der das Bodenelement 3 am Kraftfahrzeugdach 2 befestigbar ist. Die Befestigungseinheit kann insbesondere ausschließlich Saugnapfelemente, insbesondere mindestens ein Saugnapfelement 82 aufweisen. Es ist denkbar, dass Saugnapfelemente 82 mit anderen Befestigungselementen, beispielsweise einer Magnetbefestigung, kombiniert werden.

Der wesentliche Vorteil einer Saugnapfbefestigung besteht darin, dass eine magnetische Haltekraft entbehrlich ist. Die Saugnapfbefestigung ist insbesondere unabhängig von dem Material. Insbesondere kann die Saugnapfbefestigung mit den Saugnapfelementen 82 an nichtmetallischen, beispielsweise aus Kunststoffmaterialien, insbesondere faserverstärkte Kunststoffmaterialien, insbesondere kohlefaserverstärkte Kunststoffmaterialien, verwendet werden.

Das Saugnapfelement 82 ist insbesondere benachbart oder an einem Auslaufbereich 24 des Profilelements 23 angeordnet. Entlang eines Profilelements 23 können auch mehr als ein Saugnapfelement 82, beispielsweise zwei Saugnapfelemente 82 angeordnet sein. Die Saugnapfelemente 82 können an verschiedenen Profilelementen 23 des Bodenelements 3 angeordnet sein.

Das Saugnapfelement 82 weist einen hohlzylindrischen Rahmen 83 auf, der mit seiner Zylinderlängsachse im Wesentlichen senkrecht zum Kraftfahrzeugdach 2 orientiert ist. An einem dem Kraftfahrzeugdach 2 abgewandten oberen Ende des Rahmens ist ein Betätigungshebel 84 um eine Betätigungsachse 85 schwenkbar angelenkt. Mit dem Betätigungshebel 84 unmittelbar verbunden ist ein Saugnapfkegel 86, der an der unteren, der Betätigungsachse 85 gegenüberliegenden Stirnseite des Rahmens 83 übersteht.

In der in Fig. 33 gezeigten Anordnung ist der Betätigungshebel 84 in der Verriegelungsposition. In dieser Position ist der Saugnapfkegel 82 aktiviert, dass der Saugnapfkegel mit seiner kreisförmigen Stirnfläche am Kraftfahrzeugdach 2 mit Unterdruck im Saugnapfkegel 86 angepresst ist. In dieser Anordnung ist das Saugnapfelement 82 am Kraftfahrzeugdach 2 und damit das Profilelement 23 und das Bodenelement 3 gehalten. Zum Lösen der Verriegelung wird der Betätigungshebel 84 gemäß Fig. 33 im Gegenuhrzeigersinn um die Betätigungsachse 85 angehoben. Dadurch wird der Unterdruck im Saugnapfkegel 86 freigegeben und das Bodenelement kann vom Kraftfahrzeugdach 2 abgehoben werden.

Es ist auch denkbar, die Saugnapfelemente 82 an anderen Stellen des Bodenelements 3 anzuordnen. Die Anordnung beziehungsweise die Integration in den Profilelementen 23 ist besonders platzsparend und ästhetisch ansprechend.

Der Dachbehälter 1 kann vorteilhaft aus Leichtbaumaterialien, insbesondere Leichtbaumetallen und/oder nichtmetallischen Leichtbau-Werkstoffen wie Kunststoffen, insbesondere faserverstärkten Kunststoffen und insbesondere kohlefaserverstärkte und/oder glasfaserverstärkten Kunststoffen hergestellt sein.

Gemäß einem weiteren, in den Figuren nicht dargestellten Ausführungsbeispiel kann die Befestigungseinheit einen oder mehrere Klebestreifen aufweisen, die insbesondere wieder lösbar ausgeführt sind. Derartige Klebestreifen sind aus anderen Anwendungsbereichen, insbesondere im Haushalt bekannt. Derartige Klebestreifen können unmittelbar zwischen der Unterseite des Bodenelements 3 und dem Kraftfahrzeugdach 2 angeordnet sein. Die Klebestreifen können großflächig und insbesondere entlang der äußeren Kontur des Kraftfahrzeugdachs am Bodenelement 3 angeordnet sein. Überraschend wurde erkannt, dass derartige Klebestreifen eine ausreichende Befestigung des Dachbehälters 1 am Kraftfahrzeugdach 2 gewährleisten, insbesondere wenn der Dachbehälter 1 aus einem Leichtbaumaterial hergestellt ist.

Gemäß einem weiteren, nicht in den Figuren dargestellten Ausführungsbeispiel kann das Bodenelement 3 eine Wölbung aufweisen, die größer ist als die Wölbung des Kraftfahrzeugdachs 2. Zwischen einer Unterseite des Bodenelements 3 und dem Kraftfahrzeugdach 2 wird ein Hohlraum gebildet. Die Wölbung ist insbesondere in Querrichtung, also im Wesentlichen parallel zu der Frontkante 15 und/oder der Heckkante 16 ausgeführt. Dadurch, dass das Bodenelement 3 überwölbt gegenüber dem Kraftfahrzeugdach 2 ausgeführt ist, ist das Bodenelement 3 mechanisch vorgespannt am Kraftfahrzeugdach 2 angeordnet. Insbesondere ist das Bodenelement 3 nicht vollflächig überwölbt ausgeführt. Die Überwölbung ist insbesondere bereichsweise vorgesehen. Insbesondere ist eine Überwölbung in den Bereichen von Querstreben des Fahrzeugdachs 2 entbehrlich. Derartige Querstreben sind unterhalb der Außenhaut des Kraftfahrzeugdachs 2 zur Querverbindung der jeweils gegenüberliegenden A-, B- und/oder der C-Säulen des Kraftfahrzeugs vorgesehen.

Eine mechanische Verankerung des Bodenelements 2 an der Dachreling 34 ist verbessert. Durch die überwölbte Ausführung ist eine Krafteinleitung vom Bodenelement 3 auf das Kraftfahrzeugdach 2, insbesondere auf die Dachreling 34, gewährleistet. Die Aufnahme von Axialkräften, also von Kräften, die parallel zur Fahrrichtung des Kraftfahrzeugs wirken und die beispielsweise durch einen Bremsvorgang, insbesondere einen unbeabsichtigten Aufprall, verursacht werden, werden zuverlässig in die Dachreling 34 von dem Dachbehälter 1 übertragen. Das überwölbte Bodenelement kann zusätzliche Befestigungselemente aufweisen. Es ist auch denkbar, dass durch die überwölbte Ausführung, die mechanische Vorspannung als alleinige Befestigung des Dachbehälters 1 am Kraftfahrzeugdach 2 dient.

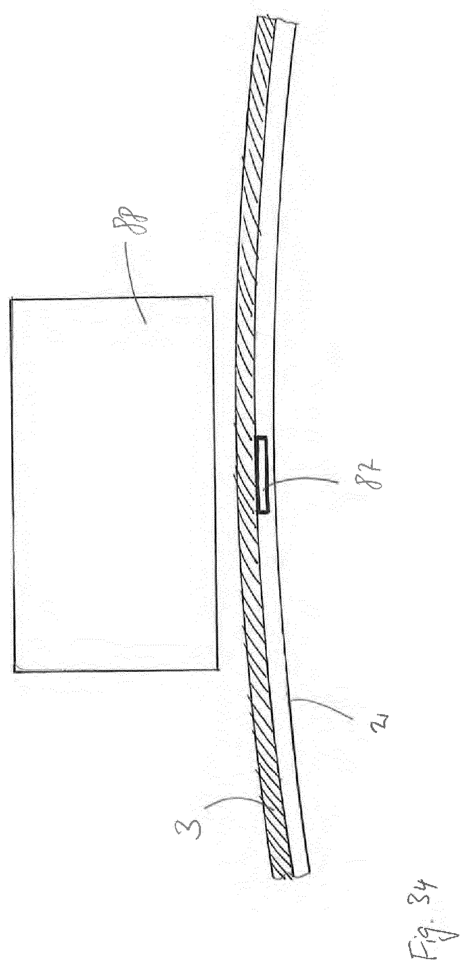

Anhand von Fig. 34 wird eine weitere Ausführungsform des Dachbehälters 1 erläutert. An einer Unterseite des Bodenelements 3 ist ein Ladungssensor 87 angeordnet, der mit einer nicht dargestellten Steuerungseinheit in Signalverbindung steht. Insbesondere ist der Ladungssensor 87 drahtlos mit der Steuerungseinheit verbunden.

Der Ladungssensor 87 dient zur Erfassung eines im Dachbehälter, insbesondere an dem Bodenelement 3 befestigten Ladeguts 88. Für die Erkennung der Ladung kann der Ladungssensor auf verschiedenen physikalischen Messprinzipien basieren, beispielsweise als Gewichtssensor und/oder kapazitiver Sensor. Der Ladungssensor 87 ist gemäß dem gezeigten Ausführungsbeispiel zwischen der Unterseite des Bodenelements 3 und der Oberseite des Kraftfahrzeugdaches 2 angeordnet. Der Ladungssensor kann im Kraftfahrzeugdach 2 integriert sein. Der Ladungssensor kann auch an einer Innenseite des Dachbehälters 1 angeordnet sein. Beispielsweise kann der Ladungssensor 87 in dem von einem Profilelement 23 gebildeten Hohlraum integriert sein. Es können auch mehrere Ladungssensoren 87 vorgesehen sein.

Der Ladungssensor 87 kann insbesondere als drucksensitive Folie ausgeführt sein, die eine flächige, insbesondere vollflächige, Ladungsüberwachung im Dachbehälter 1 ermöglicht.

Der Ladungssensor 87 dient zur Erfassung, ob ein Ladegut 88 im Dachbehälter 1 angeordnet ist. In diesem Fall kann der Ladungssensor 87 ein Signal an die Steuerungseinheit übermitteln. Zusätzlich können Verriegelungselemente vorgesehen sein, um zu erfassen, ob das Ladegut 88 an dem Bodenelement 3 verriegelt oder gesichert ist. Falls im Dachbehälter 1 ungesichertes Ladegut 88 angeordnet ist, kann der Kraftfahrzeugfahrer ein entsprechendes Signal von der Steuerungseinheit, beispielsweise auf dem Bordcomputer erhalten. Das Risiko des Transports ungesicherter Ladung im Dachbehälter ist reduziert. Der Ladungssensor 87 kann auch dazu verwendet werden, um eine gleichmäßige Beladung des Dachbehälters 1 zu ermöglichen. Dazu ist vorteilhaft, mehrere entlang des Bodenelements 3 verteilt angeordnete Ladungssensoren individuell auszulesen, um ein Beladeprofil entlang der Fläche des Bodenelements 3 zu erstellen und zu analysieren.

Der Ladungssensor 87 kann auch dazu verwendet werden, um eine Überladung, also eine Überschreitung eines maximalen Zuladegewichts, zu verhindern. Der eine oder die mehreren Ladungssensoren 87 können eine Gesamtbeladung erfassen und mit einem in der Steuerungseinheit hinterlegten Grenzwert vergleichen. Bei Überschreiten des Grenzwerts kann eine Warnung beispielsweise an den Bordcomputer des Kraftfahrzeugs übermittelt werden.

Sämtliche elektronischen Komponenten des Dachbehälters 1 können zur Energieversorgung mit einer Batterie ausgeführt sein. Zusätzlich oder alternativ zu der Batterie ist es denkbar, dass eine Transmissionseinheit vorgesehen ist, die Signale von einer externen Sendeeinheit empfängt. Die von der externen Sendeeinheit empfangenen Signale können zumindest teilweise mittels einer Induktionsvorrichtung zur Energieumwandlung und Energiespeicherung beispielsweise in einem Kondensator genutzt werden. Dadurch ist es möglich, die elektronischen Komponenten des Dachbehälters 1, beispielsweise den Ladungssensor 87, mittels Induktion Energie zu übertragen und diese Energie zum Betreiben des Ladungssensors und/oder anderer Komponenten in dem Dachbehälter 1 zu nutzen. Eine separate, eigenständige Energiequelle für den Dachbehälter 1 ist dann entbehrlich.

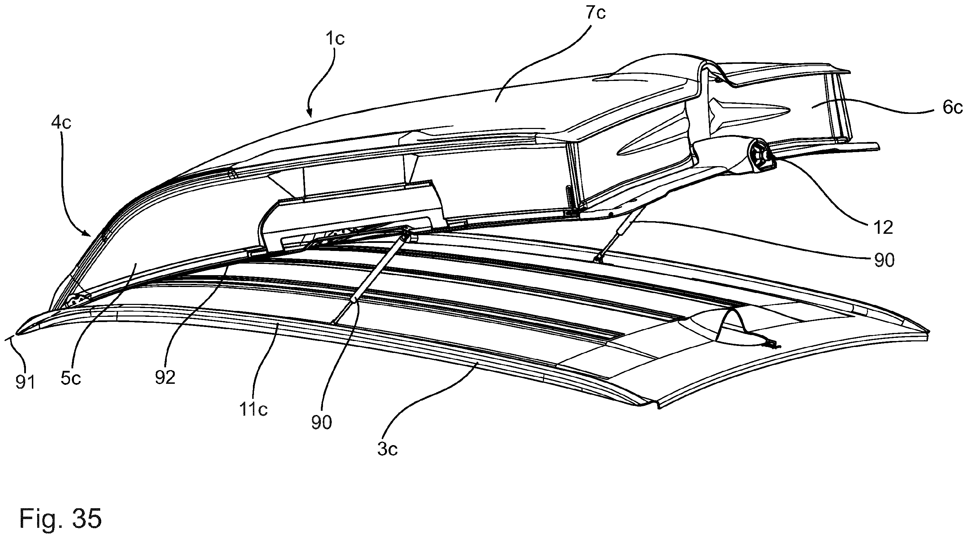

Im Folgenden wird unter Bezugnahme auf Fig. 35 bis 37 ein weiteres Ausführungsbeispiel der Erfindung beschrieben. Konstruktiv identische Teile erhalten dieselben Bezugszeichen wie bei den vorherigen Ausführungsbeispielen, auf deren Beschreibung hiermit verwiesen wird. Konstruktiv unterschiedliche, funktionell gleichartige Teile erhalten dieselben Bezugszeichen mit einem nachgestellten c.

Der Dachbehälter 1c unterscheidet sich gemäß dem in Fig. 1 bis 4 gezeigten Dachbehälter im Wesentlichen dadurch, dass zum Öffnen der Deckeleinheit 4c mit der Deckelwand 7c seitlich jeweils ein
Kraftspeicherelement 90 angeordnet ist. Das Kraftspeicherelement 90 ist gemäß dem gezeigten Ausführungsbeispiel als Gasdruckfeder ausgeführt. Ein erstes Ende des Kraftspeicherelements ist an dem Bodenelement 3c und insbesondere an einer Innenseite des Rahmens 11c angeordnet. Ein zweites, dem ersten Ende gegenüberliegendes Ende des Kraftspeicherelements 90 ist an einer Seitenwand 5c, insbesondere an einer Unterseite 92 der Seitenwand 5c, schwenkbar angelenkt.

Das Kraftspeicherelement 90 ist derart ausgeführt, dass ein manuelles Aufschwenken der Deckeleinheit 4c gegenüber dem Bodenelement 3c bezüglich einer Öffnungs-Schwenkachse 91 möglich ist und insbesondere unterstützt wird. Die Öffnungs-Schwenkachse 91 ist im Wesentlichen entlang der Frontkante 15 angeordnet. Das Kraftspeicherelement 90 verhindert ein unerwünschtes Zufallen des Dachbehälters infolge des Eigengewichts der Deckeleinheit 3c.

Das Kraftspeicherelement 90 kann auch als angetriebene Einheit ausgeführt sein, insbesondere in Form eines elektrisch angetriebenen Spindeltriebs. Beim Öffnen des Dachbehälters 1c, das manuell oder elektrisch gesteuert, insbesondere funkgesteuert, über das Schloss 12 erfolgen kann, wird der elektrisch angetriebene Spindeltrieb aktiviert und damit die Öffnungsbewegung der Deckeleinheit 4c gegenüber dem Bodenelement 3c elektrisch angetrieben ausgeführt.

An der Rückwand 6c ist das Schloss 12 angeordnet. Das Schloss 12 dient insbesondere zum Verriegeln des Dachbehälters 1c in der geschlossenen Anordnung. In der geschlossenen Anordnung ist die Deckeleinheit 4c an dem Bodenelement 3c verriegelt. Ein Verschwenken um die Öffnungs-Schwenkachse 91 ist dann nicht möglich.

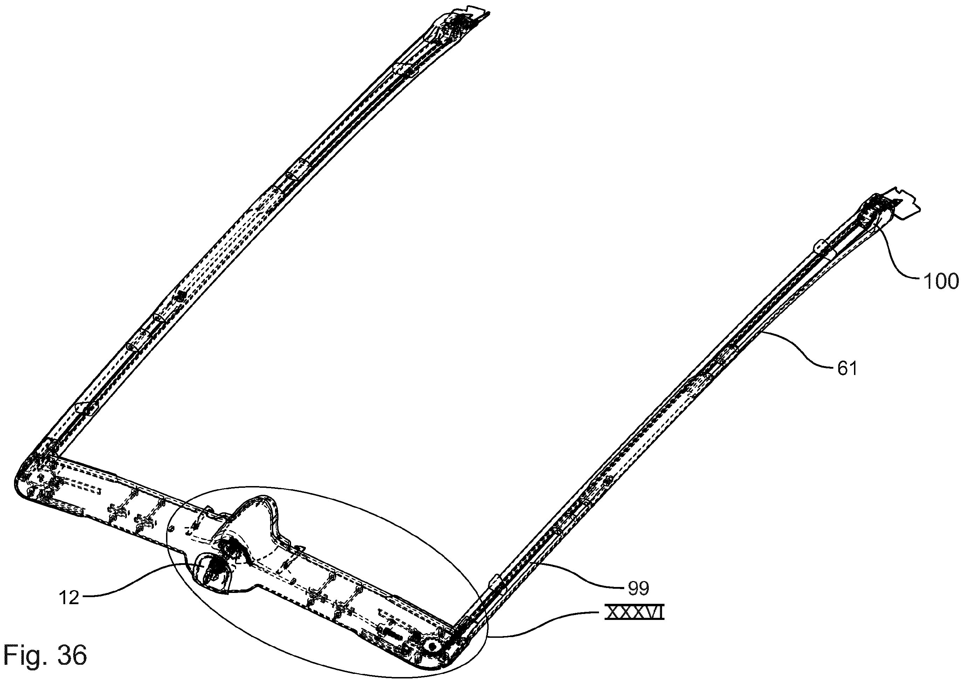

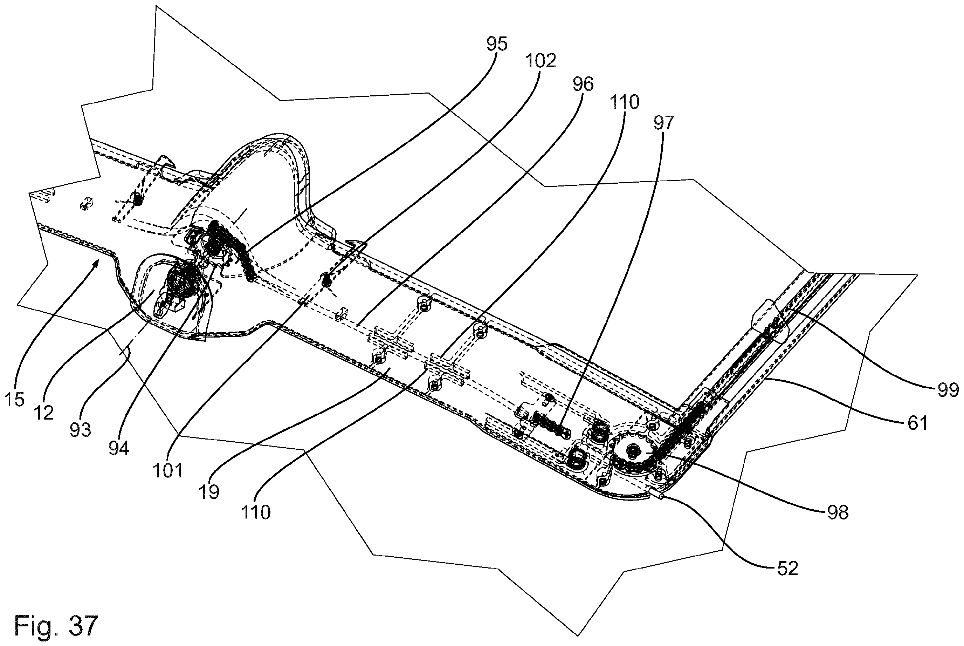

Die Verriegelungsfunktion des Schlosses 12 wird im Folgenden anhand der Fig. 36 und 37 näher erläutert. Beim Aktivieren des Schlosses erfolgt eine Drehbewegung um eine Schloss-Drehachse 93. Konzentrisch zur Schloss-Drehachse 93 ist ein Antriebszahnrad 94 drehfest mit dem Schloss 12 verbunden. Mit dem Antriebszahnrad 94 wirkt eine Antriebskette 95 zusammen, die mit einer Steuerstange 96 verbunden ist. An einem der Antriebs-Kette 95 gegenüberliegenden Ende ist die Steuerstange 96 mit einer Umlenkkette 97 verbunden, die in ein Umlenk-Zahnrad 98 zur geführten Umlenkung der Steuerkette 97 eingreift. Das Umlenk-Zahnrad 98 bewirkt eine 90°-Umlenkung der Umlenk-Kette 97. An einem der Steuerstange 96 gegenüberliegenden Ende ist die Umlenk-Kette 97 mit einer Verriegelungsstange 99 verbunden. Die Verriegelungsstange 99 erstreckt sich im Wesentlichen entlang der seitlichen Längselemente 61 des Rahmens 11c. An der Verriegelungsstange 99 ist mindestens ein Verriegelungsklotz 100 befestigt, der eine der Umlenk-Kette 97 zugewandte Schräge aufweist. An der Verriegelungsstange 99 können zusätzliche Verriegelungsklötze vorgesehen sein. Zusätzlich kann die Verriegelungsstange 99 zur Betätigung von quer ausfahrenden Verriegelungselementen wie beispielsweise in Fig. 15 dargestellt, gekoppelt sein.

Die Steuerstange 96 wirkt mit einem federbelasteten Hakenelement 101 zusammen. Das Hakenelement 101 ist mittels eines Federelements, insbesondere in Form einer Torsionsfeder 102 derart federnd belastet, dass das Hakenelement 101 in einem unbetätigten Zustand in eine Verriegelungsposition gedrückt wird.

Bei Betätigung des Schlosses 12 wird das Schloss 12 um die Schloss-Drehachse 93 und damit das Antriebs-Zahnrad 94 gedreht. Diese Drehbewegung wird von dem Antriebs-Zahnrad 94 auf die Antriebs-Kette 95 und damit auf die Steuerstange 96 übertragen. Durch die Bewegung der Steuerstange 96 wird das Hakenelement 101 entgegen der Federkraft des Federelements 102 aus der Verriegelungsposition bewegt, also entriegelt. Die Verlagerung der Steuerstange 96 wird auf die Umlenk-Kette 97 und die Verriegelungs-Stange 99 übertragen. Die Verlagerung der Steuerstange 96 bewirkt eine Verlagerung der Verriegelungs-Stange 99 und damit der Verriegelungsklötze 100 in eine Entriegelungsposition. In dieser Position ist die Deckeleinheit 4c gegenüber dem Bodenelement 3c freigegeben, also entriegelt. Ein Öffnen des Dachbehälters 1c ist möglich.

Das Verriegeln des Dachbehälters 1c erfolgt in entsprechend umgekehrter Betätigungsrichtung des Schlosses 12 und der damit gekoppelten Komponenten.

Die Steuerstange 96 ist entlang der Frontkante 15 mittels Führungselementen 110 seitlich geführt. Die Führungselemente 110 sind insbesondere an der Front-Begrenzungswand 19 integriert.

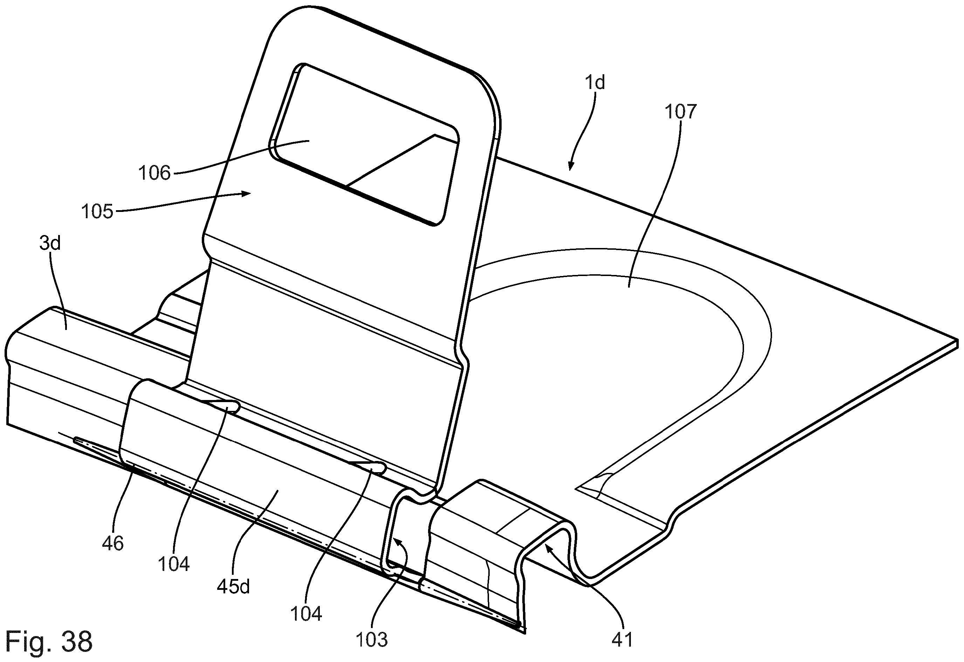

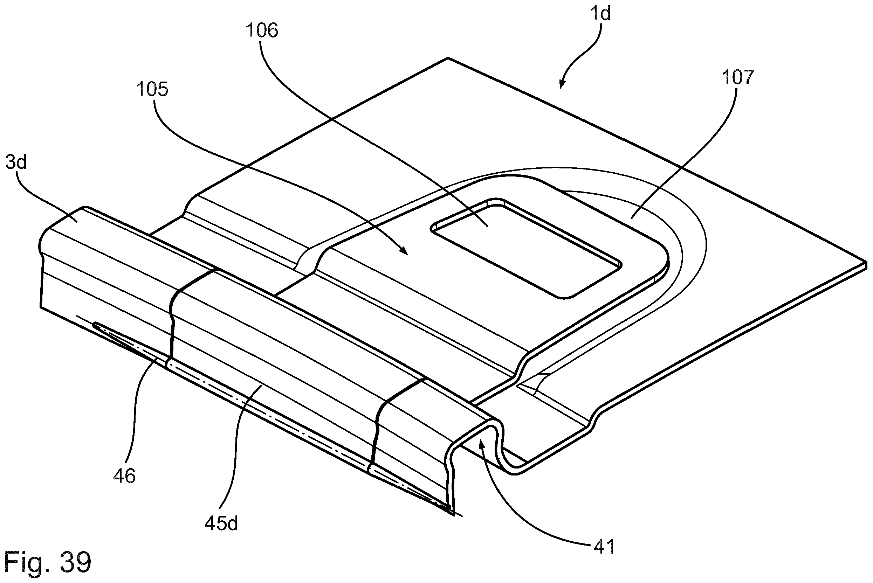

Im Folgenden wird unter Bezugnahme auf Fig. 38 und 39 ein weiteres Ausführungsbeispiel der Erfindung beschrieben. Konstruktiv identische Teile erhalten dieselben Bezugszeichen wie bei den vorherigen Ausführungsbeispielen, auf deren Beschreibung hiermit verwiesen wird. Konstruktiv unterschiedliche, jedoch funktionell gleichartige erhalten dieselben Bezugszeichen mit einem nachgestellten d.

Bei der Ausführungsform weist das Bodenelement 3d einen integrierten Rasthebel 45d auf. Der Rasthebel 45d ist um eine Schwenkachse 46 schwenkbar an dem Bodenelement angelenkt. Das Bodenelement ist mit einer Profilgeometrie 41 ausgeführt, die der Außenkontur der Dachreling 34 entspricht. Die Schwenkachse 46 ist im Wesentlichen parallel zur Längsrichtung der Dachreling 34 orientiert.

Der Rasthebel 45d weist einen Verrastabschnitt 103 auf der entsprechend der Profilgeometrie des Bodenelements 3s ausgeführt ist. Der Verrastabschnitt kann ein oder mehrere Aussteifungselemente 104 aufweisen, die zur Aussteifung des Verrastabschnitts 103 dienen.

In der entriegelten Position gemäß Fig. 38 ist der Rasthebel 45d mit dem Verrastabschnitt 103 beabstandet von der Reling 34 angeordnet. In der entriegelten Position greift der Rasthebel 45d nicht verrastend an der Dachreling 34 an.

Der Rasthebel 45d weist zudem einen Betätigungsabschnitt 105 auf mit einem Griffloch 106. Der Betätigungsabschnitt 105 insbesondere das Griffloch 106 ist derart an dem Rasthebel 45d ausgeführt, dass in der in Fig. 39 gezeigten, verriegelten Anordnung des Rasthebels 45d der Betätigungsabschnitt 105 und insbesondere das Griffloch 106 mit Abstand bezüglich des Bodenelements 3d angeordnet ist. Dazu weist das Bodenelement 3d eine muldenförmige Vertiefung 107 auf, in die der Rasthebel 45d eingelegt werden kann. In der verriegelten Anordnung des Rasthebels 45d fügt sich dieser in die Außenkontur des Bodenelements 3d ein. Der Rasthebel 45d steht einer Verwendung des Dachbehälters 1d und insbesondere des Bodenelements 3d nicht im Wege. Deren Funktionalität ist durch den Rasthebel 45d nicht eingeschränkt.

Zum Verrasten des Bodenelements 3d auf dem Kraftfahrzeugdach wird der Rasthebel 45d ausgehend von der entriegelten Anordnung in Fig. 38 um die Schwenkachse 46 geschwenkt, bis der Rasthebel 45d mit dem Verrastabschnitt 103 auf die Dachreling 34 aufgerastet ist. Durch die Aussteifungselemente 104 ist eine straffe Verbindung zwischen dem Rasthebel 45d und der Dachreling 34, insbesondere formschlüssig, gegeben. Ein Entriegeln erfolgt dadurch, dass eine Bedienperson in die Griffmulde 106 des Bedienabschnitts 105 eingreifen und den Rasthebel 45d um die Schwenkachse 46 aufschwenken kann. Dadurch, dass der Rasthebel 45d aus einem flexiblen Material wie beispielsweise Kunststoff hergestellt ist und zudem eine Strukturflexiblität aufgrund der dünnwandigen Ausführung des Verrastabschnitts 103 aufweist, ist ein mehrmaliges Auf- und Zuschwenken und ein zuverlässiges Verrasten des Anordnen des Rasthebels 45d an der Dachreling 34 gewährleistet. Die Aussteifungelemente 104 verhindern ein unbeabsichtigtes Öffnen des Rasthebels 45d.

## Patentansprüche

1. Faltbarer Dachbehälter für ein Kraftfahrzeug umfassend
a. ein Bodenelement (3; 3a; 3b),
b. eine an dem Bodenelement (3; 3a; 3b) befestigte Deckeleinheit (4),
c. eine integrierte Befestigungseinheit zum unmittelbaren, lösbaren Befestigen des Dachbehälters (1; 1a; 1b) am Kraftfahrzeug (2),
wobei die Befestigungseinheit mindestens ein Formelement (28; 36; 41) aufweist, das am Bodenelement (3; 3a; 3b) angeordnet ist,
**dadurch gekennzeichnet, dass** das mindestens eine Formelement (28; 36; 41)
- in einer Seiten-Begrenzungswand (21; 21b) des Bodenelements (3; 3a; 3b) integriert ist, indem das Formelement (36; 41)
-- als mit einem Neigungswinkel (n) gegenüber der Bodenwand (13; 13b) geneigt angeordnete Klemmlippe (36) ausgeführt ist und/oder
-- eine eine Dachreling (34) zumindest anteilig oder vollständig umgreifende Profilgeometrie (41) aufweist und/oder
- an einer Bodenwand (13; 13b) des Bodenelements (3; 3a; 3b) zum zumindest anteiligen Umgreifen eines am Dach (8) angeordneten Antennenformkörpers (30) integriert ausgeführt ist.

2. Dachbehälter gemäß Anspruch 1, **dadurch gekennzeichnet, dass** das Bodenelement (3; 3a; 3b) einstückig ausgeführt ist und insbesondere eine Bodenwand (13; 13b) und daran angeformte Begrenzungswände (19, 20, 21; 19b, 21b) aufweist, insbesondere eine Front-Begrenzungswand (19; 19b), eine Heck-Begrenzungswand (20) und zwei jeweils dazwischen angeordnete Seiten-Begrenzungswände (21; 21b).

3. Dachbehälter gemäß einem der vorstehenden Ansprüche, **gekennzeichnet durch** mindestens ein Profilelement (23) im Bodenelement (3; 3a; 3b).

4. Dachbehälter gemäß einem der vorstehenden Ansprüche, **gekennzeichnet durch** eine Schutzschicht an einer außen liegenden Unterseite des Bodenelements (3; 3a; 3b).

5. Dachbehälter gemäß einem der vorstehenden Ansprüche, **dadurch gekennzeichnet, dass** die Befestigungseinheit mindestens ein Magnetelement (29) aufweist, das insbesondere in einer Seiten-Begrenzungswand (21; 21b), in einer Bodenwand (13; 13b), in einer Front-Begrenzungswand (19; 9b) und/oder einer Heckbegrenzungswand (20) integriert ist.

6. Dachbehälter gemäß einem der vorstehenden Ansprüche, **dadurch gekennzeichnet, dass** die Befestigungseinheit ein Hakenelement (31) zum Einhaken in einem Spalt (32) der Karosserie des Kraftfahrzeugs (2) aufweist.

7. Dachbehälter gemäß einem der vorstehenden Ansprüche, **dadurch gekennzeichnet, dass** die Befestigungseinheit ein Klemmelement (42), insbesondere ein Klemmband, zum Einklemmen in einen Spalt (43) der Karosserie des Kraftfahrzeugs (2) aufweist.

8. Dachbehälter gemäß einem der vorstehenden Ansprüche, **dadurch gekennzeichnet, dass** die Befestigungseinheit mindestens einen Rasthebel (45) zum verrasteten Anliegen an der Dachreling (34) aufweist.

9. Dachbehälter gemäß einem der vorstehenden Ansprüche, **gekennzeichnet durch** eine Schutzbefestigung (48; 48b) zum Schutz gegen unbeabsichtigtes Lösen des Dachbehälters (1; 1a; 1b), wobei die Schutzbefestigung (48; 48b) insbesondere nur im geöffneten Zustand des Dachbehälters (1; 1a; 1b) betätigbar ist, wobei die Schutzbefestigung (48; 48b) insbesondere innen liegend in dem Dachbehälter (1; 1a; 1b) angeordnet ist.

10. Dachbehälter gemäß Anspruch 9, **dadurch gekennzeichnet, dass** die Schutzbefestigung (48b) mindesten ein seitlich verlagerbares Verriegelungselement (51, 52) aufweist.

11. Dachbehälter gemäß Anspruch 9 oder 10, **dadurch gekennzeichnet, dass** die Schutzbefestigung (48) mindestens eine Befestigungselement (49) zum Befestigen an einer im Dach (8) integrierten Befestigungsstelle (50; 50a) aufweist.

12. Dachbehälter gemäß einem der vorstehenden Ansprüche, **gekennzeichnet durch** eine mit dem Kraftfahrzeug (2) verbindbare Steuereinheit zum autonomen Fahren des Kraftfahrzeugs und/oder ein, insbesondere verfahrbares, Anzeigeelement, zum Anzeigen, insbesondere digitaler, Inhalte.

13. Dachbehälter gemäß einem der vorstehenden Ansprüche, **gekennzeichnet durch** mindestens eine am Bodenelement (3; 3a; 3b) integrierte Verankerungseinheit (23) zum Verankern eines Gegenstands in dem Dachbehälter (1; 1a; 1b), wobei die Verankerungseinheit (23) insbesondere ein Verankerungselement (26, 27) aufweist, an dem der Gegenstands mit einem korrespondieren Verankerungsgegenelement lösbar verankerbar ist.

## Claims

1. Foldable roof container for a motor vehicle, comprising
a. a bottom element (3; 3a; 3b),
b. a cover unit (4) fastened to the bottom element (3; 3a; 3b),
c. an integrated fastening unit for the direct, releasable fastening of the roof container (1; 1a; 1b) on the motor vehicle (2),
wherein the fastening unit comprises at least one shaped element (28; 36; 41), which is arranged on the bottom element (3; 3a; 3b),
**characterized in that** the at least one shaped element (28; 36; 41)
- is integrated in a side boundary wall (21; 21b) of the bottom element (3; 3a; 3b), as the shaped element (36; 41)
-- is designed as a clamping lip (36) situated at an inclination by an angle of inclination (n) with respect to the bottom wall (13; 13b) and/or
-- has a profile geometry (41) enclosing a roof railing (34) at least partly or entirely and/or
- is configured integrated on the bottom wall (13; 13b) of the bottom element (3; 3a; 3b) for at least partial enclosing of an antenna molding (30) situated on the roof (8).

2. Roof container as claimed in claim 1, **characterized in that** the bottom element (3; 3a; 3b) is designed as a single piece and in particular comprises a bottom wall (13; 13b) and boundary walls (19, 20, 21; 19b, 21b) formed on it, especially a front boundary wall (19; 19b), a rear boundary wall (20) and two side boundary walls (21; 21b) respectively arranged in between.

3. Roof container as claimed in one of the preceding claims, **characterized by** at least one profile element (23) in the bottom element (3; 3a; 3b).

4. Roof container as claimed in one of the preceding claims, **characterized by** a protective coating on an exterior underside of the bottom element (3; 3a; 3b).

5. Roof container as claimed in one of the preceding claims, **characterized in that** the fastening unit comprises at least one magnetic element (29), which is integrated in particular in a side boundary wall (21; 21b), in a bottom wall (13; 13b), in a front boundary wall (19; 9b) and/or a rear boundary wall (20).

6. Roof container as claimed in one of the preceding claims, **characterized in that** the fastening unit comprises a hook element (31) for hooking in a gap (32) of the bodywork of the motor vehicle (2).

7. Roof container as claimed in one of the preceding claims, **characterized in that** the fastening unit comprises a clamping element (42), especially a clamping strap, for clamping in a gap (43) of the bodywork of the motor vehicle (2).

8. Roof container as claimed in one of the preceding claims, **characterized in that** the fastening unit comprises at least one locking lever (45) for resting against the roof railing (34) in interlocked manner.

9. Roof container as claimed in one of the preceding claims, **characterized by** a protective fastening (48; 48b) for protection against accidental releasing of the roof container (1; 1a; 1b), wherein the protective fastening (48; 48b) can be activated in particular only in the opened state of the roof container (1; 1a; 1b), wherein the protective fastening (48; 48b) is arranged in particular inside the roof container (1; 1a; 1b).

10. Roof container as claimed in claim 9, **characterized in that** the protective fastening (48b) comprises at least one laterally movable interlocking element (51, 52).

11. Roof container as claimed in claim 9 or 10, **characterized in that** the protective fastening (48) comprises at least one fastening element (49) for fastening to a fastening point (50; 50a) integrated in the roof (8).

12. Roof container as claimed in one of the preceding claims, **characterized by** a control unit connectible to the motor vehicle (2) for independent driving of the motor vehicle and/or a display element, especially a movable one, for displaying of contents, especially digital contents.

13. Roof container as claimed in one of the preceding claims, **characterized by** at least one anchoring unit (23) integrated on the bottom element (3; 3a; 3b) for the anchoring of an object in the roof container (1; 1a; 1b), wherein the anchoring unit (23) comprises in particular an anchoring element (26, 27) at which the object is releasably anchorable to a corresponding mating anchoring element.

## Revendications

1. Coffre de toit pliable pour véhicule automobile, comprenant
a. un élément de fond (3 ; 3a ; 3b),
b. une unité formant couvercle (4), fixée à l'élément de fond (3 ; 3a ; 3b),
c. une unité de fixation intégrée permettant une fixation libérable directe du coffre de toit (1 ; 1a ; 1b) au véhicule automobile (2),
l'unité de fixation comportant au moins un élément moulé (28 ; 36 ; 41) agencé au niveau de l'élément de fond (3 ; 3a ; 3b),
**caractérisé en ce que** l'au moins un élément moulé (28 ; 36 ; 41)
- est intégré dans une paroi de délimitation latérale (21 ; 21b) de l'élément de fond (3 ; 3a ; 3b) par la réalisation de l'élément moulé (36 ; 41)
-- sous la forme d'une lèvre de serrage (36) disposée de manière inclinée présentant un angle d'inclinaison (n) par rapport à la paroi de fond (13 ; 13b) et/ou
-- de sorte que l'élément moulé présente une géométrie de profilé (41) entourant au moins proportionnellement ou entièrement un rail de toit (34) et/ou
- est intégré au niveau d'une paroi de fond (13 ; 13b) de l'élément de fond (3 ; 3a ; 3b) pour entourer au moins proportionnellement un corps moulé d'antenne (30) disposé au niveau du toit (8).

2. Coffre de toit selon la revendication 1, **caractérisé en ce que** l'élément de fond (3 ; 3a ; 3b) est réalisé d'une seule pièce et comporte en particulier une paroi de fond (13 ; 13b) et des parois de délimitation (19, 20, 21 ; 19b, 21b) formées sur celle-ci, en particulier une paroi de délimitation avant (19 ; 19b), une paroi de délimitation arrière (20) et deux parois de délimitation latérales (21 ; 21b) disposées respectivement entre celles-ci.

3. Coffre de toit selon l'une des revendications précédentes, **caractérisé par** au moins un élément profilé (23) dans l'élément de fond (3 ; 3a ; 3b).

4. Coffre de toit selon l'une des revendications précédentes, **caractérisé par** une couche de protection sur un côté inférieur extérieur de l'élément de fond (3, 3a, 3b).

5. Coffre de toit selon l'une des revendications précédentes, **caractérisé en ce que** l'unité de fixation comporte au moins un élément magnétique (29) qui est intégré en particulier dans une paroi de délimitation latérale (21 ; 21b), dans une paroi de fond (13 ; 13b), dans une paroi de délimitation avant (19 ; 9b) et/ou dans une paroi de délimitation arrière (20).

6. Coffre de toit selon l'une des revendications précédentes, **caractérisé en ce que** l'unité de fixation comporte un élément de crochet (31) pour l'accrochage dans une fente (32) de la carrosserie du véhicule automobile (2).

7. Coffre de toit selon l'une des revendications précédentes, **caractérisé en ce que** l'unité de fixation comporte un élément de serrage (42), en particulier une bande de serrage, pour le serrage dans une fente (43) de la carrosserie du véhicule automobile (2).

8. Coffre de toit selon l'une des revendications précédentes, **caractérisé en ce que** l'unité de fixation comporte au moins un levier d'encliquetage (45) pour l'encliquetage sur le rail de toit (34).

9. Coffre de toit selon l'une des revendications précédentes, **caractérisé par** une fixation de protection (48 ; 48b) pour 1a protection du coffre de toit (1 ; 1a ; 1b) contre un desserrage involontaire, la fixation de protection (48 ; 48b) ne pouvant être actionnée en particulier que lorsque le coffre de toit (1 ; 1a ; 1b) est ouvert, la fixation de protection (48 ; 48b) étant disposée en particulier à l'intérieur du coffre de toit (1 ; 1a ; 1b).

10. Coffre de toit selon la revendication 9, **caractérisé en ce que** la fixation de protection (48b) comporte au moins un élément de verrouillage (51, 52) pouvant être déplacé latéralement.

11. Coffre de toit selon la revendication 9 ou 10, **caractérisé en ce que** la fixation de protection (48) comporte au moins un élément de fixation (49) pour la fixation à un point de fixation (50 ; 50a) intégré dans le toit (8).

12. Coffre de toit selon l'une des revendications précédentes, **caractérisé par** une unité de commande qui peut être reliée au véhicule automobile (2) pour la conduite autonome du véhicule automobile et/ou un élément d'affichage, en particulier, mobile pour l'affichage de contenus, en particulier, numériques.

13. Coffre de toit selon l'une des revendications précédentes, **caractérisé par** au moins une unité d'ancrage (23) intégrée au niveau de l'élément de fond (3 ; 3a ; 3b) pour la fixation d'un objet au coffre de toit (1 ; 1a ; 1b), l'unité d'ancrage (23) comportant en particulier un élément d'ancrage (26, 27), sur lequel l'objet peut être ancré de manière amovible à l'aide d'un contre-élément d'ancrage correspondant.
